(19) Europäisches Patentamt
European Patent Office
Office européen des brevets

(11) **EP 3 375 682 B1**

## (12) EUROPEAN PATENT SPECIFICATION

(45) Date of publication and mention
of the grant of the patent:
**26.08.2020 Bulletin 2020/35**

(21) Application number: **16875689.8**

(22) Date of filing: **14.12.2016**

(51) Int Cl.:
*G06T 7/60* *(2017.01)*        *G06T 7/73* *(2017.01)*
*G06T 7/77* *(2017.01)*        *B60W 40/112* *(2012.01)*
*G01B 11/26* *(2006.01)*

(86) International application number:
**PCT/JP2016/087249**

(87) International publication number:
**WO 2017/104712 (22.06.2017 Gazette 2017/25)**

(54) **VEHICLE-USE ROLL-ANGLE ESTIMATION SYSTEM, VEHICLE, VEHICLE-USE ROLL-ANGLE ESTIMATION METHOD**

SYSTEM ZUR SCHÄTZUNG DES ROLLWINKELS ZUR VERWENDUNG IN EINEM FAHRZEUG, FAHRZEUG, VERFAHREN ZUR SCHÄTZUNG DES ROLLWINKELS ZUR VERWENDUNG IN EINEM FAHRZEUG

SYSTÈME D'ESTIMATION D'ANGLE DE ROULIS POUR UTILISATION DANS UN VÉHICULE, VÉHICULE, PROCÉDÉ D'ESTIMATION D'ANGLE DE ROULIS POUR UTILISATION DANS UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.12.2015 JP 2015243098**

(43) Date of publication of application:
**19.09.2018 Bulletin 2018/38**

(73) Proprietor: **Yamaha Hatsudoki Kabushiki Kaisha Iwata-shi, Shizuoka 438-8501 (JP)**

(72) Inventor: **FUKUTA, Takaaki
Iwata-shi
Shizuoka 438-8501 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**EP-A1- 2 160 019        WO-A1-2011/152053
JP-A- 2010 000 860      JP-A- 2015 058 915
JP-A- 2016 007 979      US-A1- 2005 213 818**

- **MARC SCHLIPSING ET AL: "Video-based roll angle estimation for two-wheeled vehicles", INTELLIGENT VEHICLES SYMPOSIUM (IV), 2011 IEEE, IEEE, 5 June 2011 (2011-06-05), pages 876-881, XP031999043, DOI: 10.1109/IVS.2011.5940533 ISBN: 978-1-4577-0890-9**

**Description**

TECHNICAL FIELD

The present teaching relates to a technique for estimating a vehicle roll angles by means of image processing.

BACKGROUND ART

As a technique for estimating a vehicle's inclination by means of image processing, Japanese Patent Application Publication No. 2015-58915 (Patent Document 1) discloses a roll angle estimation device for estimating a motorcycle's roll angle based on image data taken by a camera mounted on a motorcycle. The roll angle estimation device detects straight lines from the image data, classifies them into vertical straight lines and horizontal straight lines, and calculates an average gradient of the vertical straight lines and an average gradient of the horizontal straight lines. Based on these average gradients, a roll angle of the motorcycle is estimated.

Also, as a technique to correct an inclination of an object in a captured image, Japanese Patent No. 4950290 (Patent Document 2) discloses an imaging device which includes a sensor for detecting a physical inclination of an imaging section. In this imaging device, image processing is performed based on an inclination of the imaging section detected by the sensor, and there is generated a histogram of a plurality of angle components appearing in objects in the captured image. Then, angle components of a specific angle that satisfies predetermined standards in the histogram are selected as s rotation angle for rotation conversion. If there is no angle component that satisfies the standards, then the inclination detected by the sensor is selected as the rotation angle for the rotation conversion.

As another technique for correcting an inclination of an image, Japanese Patent No. 4862080 (Patent Document 3) discloses an image processing device which performs correction on a captured image by utilizing brightness information of pixel blocks which constitute the captured image. This image processing device makes use of arithmetic expressions for calculating orientation distribution of brightness gradient or brightness spectrum intensity, into which position information and brightness information of a pixel in the pixel block are inserted to calculate, and determine appropriateness for use in estimating an inclination of an image within the pixel block. Then, based on an inclination angle of a line segment detected in the pixel block which is determined as appropriate for use, an inclination angle of the captured image is obtained.

Further patent documents disclosing automatic determination of roll or tilt angle of a vehicle or a wearable camera based on analysis of captured image(s) are represented by DE102014218075 and EP2160019, respectively. The scientific publication by Schlipsing et al., "Video-Based Roll Angle Estimation for Two-Wheeled Vehicles", IEEE Intelligent Vehicle Symposium, 2011, represents another example.

CITATION LIST

PATENT DOCUMENT

Patent Document 1: Japanese Patent Application Publication No. 2015-58915
Patent Document 2: Japanese Patent No. 4950290
Patent Document 3: Japanese Patent No. 4862080

SUMMARY OF INVENTION

TECHNICAL PROBLEM

In the conventional roll angle estimation device disclosed in Japanese Patent Application Publication No. 2015-58915, there can be cases where an appropriate estimation accuracy is not achieved when the number of detected straight lines in the vertical direction or in the horizontal direction does not reach a valid number for roll angle estimation.

The imaging device disclosed in Japanese Patent No. 4950290 performs image processing based on an inclination of an imaging section detected by the sensor, which means that it becomes difficult to make an accurate correction on the inclination of an object without the sensor. The image processing device disclosed in Japanese Patent No. 4862080 does not use a sensor, which means that it is impossible to verify if an inclination angle of a detected line segment or a detected brightness gradient is a vertical component or a horizontal component. This could lead to a problem where it is impossible to obtain an accurate inclination angle of the captured image.

In consideration of the above, the present application discloses a technique which enables, in a vehicle which is capable of being inclined leftward and rightward with respect to a traveling direction, accurate estimation of a roll angle of an imaging device that is used to capture images forward or rearward from a vehicle by using an image captured by the imaging device.

SOLUTION TO PROBLEM and ADVANTAGEOUS EFFECTS OF INVENTION

There is a vehicle capable of being inclined to a left-right direction of the vehicle with respect to a traveling direction (i.e., a fore-aft direction of the vehicle). By obtaining the vehicle's inclination angle (rotation angle) in the left-right direction about an axis represented by the fore-aft direction of the vehicle, i.e., by obtaining a roll angle of the vehicle, it becomes possible to use information which relates to the vehicle roll angle in various applications including vehicle control.

One way to obtain the vehicle roll angle is the direct use of results from various sensors. Another way is to perform arithmetic processing based on results from various sensors to estimate the vehicle roll angle.

The inventor conducted studies on systems for estimating vehicle roll angles. Among vehicles which are inclined to the left-right direction, some vehicles have a limited range in their roll angle. For example, motorcycles are inclined to the left-right direction but there are limits in their roll angles. The vehicle's roll angle is limited to an angle smaller than 90 degrees in both left and right directions with respect to a center axis represented by a direction which is perpendicular to a road or ground. A maximum angle of the roll angle is determined by an outline shape of the vehicle's body in the left-right direction. In addition to motorcycles, examples of vehicles limited in their roll angles include auto tricycles, LMWs (Leaning Multi Wheels), snowmobiles, ATVs (All Terrain Vehicles) and watercrafts (Personal Watercrafts). Contrary to this, aircrafts, which are also inclined to left and right with respect to the traveling direction, do not have limits in their roll angle. Specifically, those vehicles which travel or sail on the ground, snow or water while making contact with the travel surface, i.e., vehicles traveling on a travel surface are limited in their range of roll angle.

Also, among the vehicles which are inclined to the left-right direction, there are those which have a small range in their rotation angles in an up-down direction about an axis provided by the vehicle's left-right direction, i.e., vehicles which have a small pitch-angle change, and vehicles which have almost no pitch-angle change. For example, a motorcycle has a very small pitch-angle change. In a motorcycle, the pitch-angle change is within a stroke range of its suspension system. In addition to motorcycles, examples of the vehicle which has a small range in its pitch-angle change includes, auto tricycles, LMWs (Leaning Multi Wheels), snowmobiles, ATVs (All Terrain Vehicles) and watercrafts (personal watercrafts). Contrary to this, aircrafts, which are also inclined to the left and right with respect to the traveling direction, do not have limits in their pitch angle. Specifically, those vehicles which travel or sail on the ground, snow or water while making contact with the travel surface, i.e., vehicles traveling on a travel surface have a small pitch angle change.

The inventor conducted a study into a roll angle estimation system for vehicles, among those which are inclined to the left-right direction, having a limit in their roll angle and having a small change in their pitch angle. The inventor mounted a camera onto a vehicle, like a vehicle described above, took images in the vehicle's fore-aft direction while the vehicle was traveling, and analyzed brightness gradient orientation histograms of the captured images. The inventor analyzed brightness gradient orientation histograms of images taken under all possible situations of the traveling vehicle. As a result, the inventor found that in frequency distribution of brightness gradient orientation histogram, there are cases where frequency of brightness gradient orientation representing a vertical-direction edge and frequency of brightness gradient orientation representing a horizontal-direction edge appear characteristically in a certain relative relationship.

Further, the inventor found an arrangement for identifying a brightness gradient orientation which represents the vertical-direction edges, and a brightness gradient orientation which represents the horizontal-direction edges in brightness gradient orientation histograms of images. Then, the inventor found that by using the identified brightness gradient orientation which represents the vertical-direction edges and the identified brightness gradient orientation which represents the horizontal-direction edges, it is possible to accurately estimate the vehicle roll angle. In other words, it is possible to accurately estimate the vehicle roll angle by identifying a brightness gradient orientation which represents the vertical-direction edges and a brightness gradient orientation which represents the horizontal-direction edges in a brightness gradient orientation histogram of images obtained through image taking in the fore-aft direction of a vehicle which is traveling on a travel surface. Based on these findings, the inventor developed the following embodiment.

A vehicle-use roll-angle estimation system according to the embodiment of the present teaching is mounted on a vehicle which is inclinable to a left-right direction with respect to a traveling direction. The vehicle-use roll-angle estimation system includes: an imaging device capable of capturing forward or rearward images from the vehicle; and a roll-angle estimation device for obtaining captured images taken by the imaging device and analyzing the images thereby estimating a roll angle of the imaging device which changes as the vehicle is inclined. The roll-angle estimation device includes: a histogram generator for generating a brightness gradient orientation histogram which indicates a frequency distribution of a brightness gradient orientation of a plurality of pixels contained in the image; and an estimation section for identifying a brightness gradient orientation representing an edge in a vertical-direction which is the gravitational direction and a brightness gradient orientation representing an edge in a horizontal-direction which is a direction perpendicular to the gravitational direction by utilizing the brightness gradient orientation histogram, and then estimating the roll angle by utilizing at least one of the identified brightness gradient orientation of the vertical-direction edge or the identified brightness gradient orientation of the horizontal-direction edge (first arrangement).

According to the first arrangement, the estimation section identifies, from the brightness gradient orientation histogram, an inclination of the edge in the vertical-direction which is the gravitational direction, with respect to a reference axis of the image and an inclination of the edge in the horizontal-direction which is a direction perpendicular to the gravitational direction, with respect to the reference axis of the image. In other words, in a brightness gradient orientation histogram of an image obtained by taking a forward or rearward image from a vehicle with an imaging device mounted on the vehicle which is traveling on a travel surface, a brightness gradient orientation which represents the edge in the vertical-direction i.e., the gravitational direction and a brightness gradient orientation which represents the edge in the horizontal-direction i.e. a direction perpendicular to the gravitational direction are identified. In the frequency distribution of the brightness gradient orientation histogram, the inventor already found that frequency of brightness gradient orientation representing the vertical-direction edges and frequency of brightness gradient orientation representing the horizontal-direction edges appear characteristically with a specific relative relationship. Thus, by generating a brightness gradient orientation histogram of images obtained by taking a forward or rearward image from a vehicle traveling on a travel surface, and then by utilizing this to identify brightness gradient orientations which represent the vertical-direction edges and the horizontal-direction edges, it is possible to accurately identify inclinations of the vertical-direction edges and the horizontal-direction edges in the image. By estimating the roll angle by utilizing at least one of the brightness gradient orientation of the vertical-direction edges or the brightness gradient orientation of the horizontal-direction edges, accurate roll-angle estimation becomes possible. As a result, it is possible to accurately estimate the roll angle of the imaging device by using a captured image.

Among peaks in the brightness gradient orientation histogram, the estimation section is capable of identifying brightness gradient orientations of two peaks which represent two brightness gradient orientations having a mutually perpendicular relationship as a brightness gradient orientation which represents the vertical-direction edges and a brightness gradient orientation which represents the horizontal-direction edges (second arrangement).

According to the second arrangement, two brightness gradient orientations which are perpendicular to each other are identified as brightness gradient orientations which represent the vertical-direction edges and the horizontal-direction edges in the image, among brightness gradient orientations having greater frequencies than others. Therefore, it is possible to identify the vertical inclination and horizontal inclination in the image more accurately. It should be noted here that the mutually perpendicular two peaks are two peaks which represent mutually perpendicular brightness gradient orientations.

Of the brightness gradient orientations which represent the two peaks, the estimation section is capable of selecting one which has a smaller inclination from the vertical axis of the image than a first threshold value as the brightness gradient orientation that represents the vertical-direction edges while selecting the other which has a greater inclination from the vertical axis of the image than the first threshold value as the brightness gradient orientation that represents the horizontal-direction edges, thereby estimating the roll angle (third arrangement).

A vehicle which is inclinable to the left-right direction with respect to the traveling direction has a limit in its left-right inclination angles during the travel. Accordingly, there is a limit in the inclination of the vertical-direction edges with respect to the vertical axis of the image. By utilizing this, the above-described third arrangement is capable of identifying which of the two peaks that are perpendicular to each other in the brightness gradient orientation represents the vertical direction.

The histogram generator equates, for any angle $\theta$ ($\theta$ represents an angle not smaller than 0 degree and not greater than 180 degrees), the angle $\theta$ with the angle ($\theta + 180$ degrees), and thereby is capable of generating a brightness gradient orientation histogram within a range of the angle $\theta$ (not smaller than 0 degree and not greater than 180 degrees) (fourth arrangement). The fourth arrangement enables efficient generation of the brightness gradient orientation histogram.

The histogram generator is capable of weighting a brightness gradient intensity of each pixel, and adding the brightness gradient of each pixel to the histogram (fifth arrangement). The fifth arrangement enables generation of a brightness gradient orientation histogram which takes brightness gradient intensity into account.

When it is impossible to select two peaks which are perpendicular to each other, the estimation section is capable of: selecting a peak, from those in the brightness gradient orientation histogram, which has a brightness gradient orientation of an angle difference from a brightness gradient orientation that represents previous vertical-direction edges not exceeding a second threshold value, as a peak of the brightness gradient orientation representing the vertical-direction edges; and estimating a current roll angle using said peak brightness gradient orientation (sixth arrangement).

For example, there are cases where a captured image does not contain a sufficient number of brightness gradient orientations representing the horizontal-direction edges, and therefore does not give a distinctive peak. In such a case, it is impossible to select the mutually perpendicular two peaks. According to the above-described sixth arrangement, it is possible, even under such a circumstance, to identify, from previously identified brightness gradient orientations representing the vertical-direction edges, a peak brightness gradient orientation which is within a range not exceeding the second threshold value, as a brightness gradient orientation representing the current vertical-direction edges. Therefore, it is possible to estimate a roll angle by using the brightness gradient orientation which represents the vertical-direction edges.

When it is impossible to select the mutually perpendicular two peaks, the estimation section performs a shape matching between a previous brightness gradient orientation histogram and a current brightness gradient orientation histogram, thereby calculating a roll angle displacement from the past until now, and estimate a current roll angle from the roll angle displacement and the previous roll angle (seventh arrangement).

According to the seventh arrangement, it becomes possible, when it is impossible to select the mutually perpendicular two peaks, to estimate a roll angle by utilizing a past brightness gradient orientation histogram and a current brightness gradient orientation histogram.

The vehicle-use roll-angle estimation system may further include an internal sensor which detects an inclination angle of the vehicle. In this case, it is possible to use the inclination angle of the vehicle which is detected by the internal sensor for complementing the roll angle which is estimated by the estimation section (eighth arrangement). The eighth arrangement enables a complement of a roll angle estimation value in cases where it is impossible to perform the roll angle estimation using the above-described brightness gradient orientation histogram.

In the first through the seventh arrangements, the vehicle-use roll-angle estimation system may further include an internal sensor which detects an inclination angle of the vehicle. In this case, it is possible to use the inclination angle of the vehicle which is detected by the internal sensor for verification of the roll angle which is estimated by the estimation section (ninth arrangement). The ninth arrangement enables improving roll angle estimation accuracy.

In the above-described eighth arrangement, it is possible to use the inclination angle of the vehicle which is detected by the internal sensor for verification of the roll angle which is estimated by the estimation section (tenth arrangement). The tenth arrangement enables to improve roll angle estimation accuracy.

Any vehicle provided with the vehicle-use roll-angle estimation system that includes any of the above-described first through tenth arrangements is included in embodiments according to the present teaching.

A vehicle-use roll-angle estimation method according to an embodiment of the present teaching is a method for estimation, in a vehicle which is inclinable to a left-right direction with respect to a traveling direction, of a roll angle of an imaging device which changes as the vehicle's inclination changes, by analyzing an image captured by the imaging device capable of capturing forward or rearward images from the vehicle. The vehicle-use roll-angle estimation method includes: an image obtaining step for obtaining an image with the imaging device; a histogram generation step for generating a brightness gradient orientation histogram which indicates frequency distribution of brightness gradient orientation of a plurality of pixels contained in the image; an identification step for a computer to identify a brightness gradient orientation representing an edge in a vertical-direction which is the gravitational direction, and brightness gradient orientation representing an edge in a horizontal-direction which is a direction perpendicular to the gravitational direction by utilizing the brightness gradient orientation histogram; and an estimation step for a computer to estimate the roll angle by utilizing at least one of the identified brightness gradient orientation of the vertical-direction edge or the identified brightness gradient orientation of the horizontal-direction edge.

A vehicle-use roll-angle estimation program according to an embodiment of the present teaching is a program for estimation, in a vehicle which is inclinable to a left-right direction with respect to a traveling direction, of a roll angle of an imaging device which changes as the vehicle's inclination changes, by analyzing an image captured by the imaging device capable of capturing forward or rearward images from the vehicle. The vehicle-use roll-angle estimation program causes a computer to execute: an image obtaining process of obtaining an image captured by the imaging device; a histogram generation process for generation of a brightness gradient orientation histogram which shows a frequency distribution of a brightness gradient orientation of a plurality of pixels contained in the image; an identification process of identifying a brightness gradient orientation representing edges in a vertical-direction that indicates the gravitational direction, and a brightness gradient orientation representing edges in a horizontal-direction that indicates a direction perpendicular to the gravitational direction, by using the brightness gradient orientation histogram, and an estimation process of estimating the roll angle by using at least one of the identified brightness gradient orientation of the vertical-direction edges or the identified brightness gradient orientation of the horizontal-direction edges.

In the above-described vehicle-use roll-angle estimation system, the above-described vehicle-use roll-angle estimation method and the above-described vehicle-use roll-angle estimation program, the brightness gradient orientation representing the edges in the vertical-direction which indicates the gravitational direction is an inclination of the edges in the vertical direction which indicates the gravitational direction, with respect to the reference axis of the image. The brightness gradient orientation representing the edges in a horizontal direction which indicates a direction perpendicular to the gravitational direction is an inclination of the edges in the horizontal direction, which indicates a direction perpendicular to the gravitational direction, with respect to the reference axis of the image.

Vehicles in the present teaching are those vehicles capable of rolling in a rotating direction around an axis provided by the vehicle's fore-aft direction, i.e., rolling direction, yet their roll angle is limited and their pitch angle changes are small. Specifically, they are vehicles traveling or moving on a travel surface provided by the earth ground, snow surface, water surface, etc. Examples of the vehicles include motorcycles, auto tricycles, LMWs (Leaning Multi Wheels), snowmobiles, ATVs (All Terrain Vehicles) and watercrafts (personal watercrafts).

BRIEF DESCRIPTION OF DRAWINGS

[Fig. 1] Fig. 1 is a side view of a vehicle according to Embodiment 1.
[Fig. 2] Fig. 2 is a function block diagram which shows an arrangement example of a vehicle-use roll-angle estimation system 10.
[Fig. 3] Fig. 3 is a drawing for describing coordinates in an image.
[Fig. 4] Fig. 4 is a drawing for describing an inclination angle of a vehicle.
[Fig. 5] Fig. 5 is a flow chart which shows an operation example of a roll-angle estimation device in Fig. 2.
[Fig. 6] Fig. 6 shows an example of brightness gradient orientations around a pixel.
[Fig. 7A] Fig. 7A shows an example of Sobel filter which is utilized in calculation of a brightness gradient in the x direction.
[Fig. 7B] Fig. 7B shows an example of Sobel filter which is utilized in calculation of a brightness gradient in the y direction.
[Fig. 8] Fig. 8 is a flow chart which shows a processing example in executing a calculation according to Mathematical Expression (6).
[Fig. 9] Fig. 9 shows an example of two peaks which represent mutually perpendicular brightness gradient orientations in a brightness gradient orientation histogram.
[Fig. 10A] Fig. 10A shows an example relationship between an image and an inclination of the vehicle 1 when the vehicle 1 has an inclination angle of zero degree in its left-right direction.
[Fig. 10B] Fig. 10B shows an example of two peaks which are detected in the image in Fig. 10A.
[Fig. 11A] Fig. 11A shows an example relationship between an image and an inclination of the vehicle 1 when the vehicle 1 has an inclination angle which is not zero degree in its left-right direction.
[Fig. 11B] Fig. 11B shows an example of two peaks which are detected in the image in Fig. 11A.
[Fig. 12A] Fig. 12A shows brightness gradient orientations of mutually perpendicular two peaks which were detected in a previous frame.
[Fig. 12B] Fig. 12B shows a brightness gradient orientation of a peak which was detected in a current frame.
[Fig. 13] Fig. 13 is a function block diagram which shows an arrangement example of a vehicle-use roll-angle estimation system in Embodiment 2.
[Fig. 14] Fig. 14 is a flow chart which shows an operation example of a roll-angle estimation device 20 in Fig. 13.
[Fig. 15] Fig. 15 shows an example of roll angle estimation by utilizing a vehicle-use roll-angle estimation system.
[Fig. 16] Fig. 16 is a drawing for describing a roll-angle estimation system.

DESCRIPTION OF EMBODIMENTS

In the following description, for the purpose of explanation, many specific details will be disclosed in order to provide a deep understanding of the present teaching. However, it is clear for those skilled in the art that the present teaching is implementable without these specific details. The present disclosure should be considered as an exemplification of the present teaching, not as an intention to limit the present teaching to specific embodiments provided in the following drawings or description.

Hereinafter, with reference to the drawings, the description will cover a vehicle which includes a vehicle-use roll-angle estimation system as an embodiment of the present teaching. In the present embodiment, a motorcycle will be used as an example of the vehicle. In the drawings, the same or equivalent components will be indicated with the same reference symbols, and their description will not be repeated. Also, note that size of components or proportions among the components in each drawing may not be true to the size of actual components, or actual proportions thereof. In the following description, the terms forward, rearward, leftward and rightward mean forward, rearward, leftward and rightward when viewed from the vehicle rider sitting on the seat while gripping the handlebar. In the drawings, Arrow F indicates a forward direction of the vehicle. Arrow B indicates a rearward direction of the vehicle. Arrow L indicates a leftward direction of the vehicle. Arrow R indicates a rightward direction of the vehicle. Arrow U indicates an upward direction of the vehicle. Arrow D indicates a downward direction of the vehicle. A direction which is perpendicular to both of the vehicle's left-right direction and the up-down direction is the vehicle's fore-aft direction.

(Embodiment 1)

[Overview]

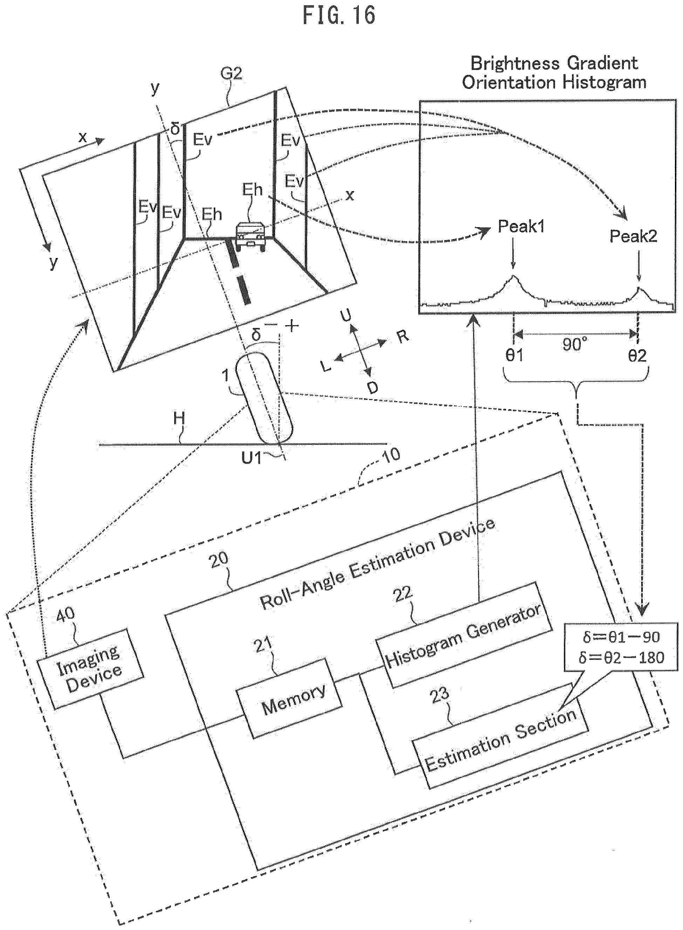

Fig. 16 is a drawing for describing a roll-angle estimation system in Embodiment 1. The roll-angle estimation system 10 includes an imaging device 40 and a roll-angle estimation device 20. The imaging device 40 is capable of capturing forward images or rearward images from a vehicle 1. The roll-angle estimation device 20 obtains the images captured by the imaging device 40 and analyzes the images, thereby estimating an inclination angle $\delta$ in a left-right direction of the vehicle 1, i.e., a roll angle of the imaging device 40 which changes as the vehicle 1 is inclined. The inclination angle $\delta$ of the vehicle 1 may also be called a roll angle of the vehicle 1. The roll-angle estimation device 20 includes a histogram generator 22 and an estimation section 23. The histogram generator 22 generates a brightness gradient orientation histogram which shows a frequency distribution of brightness gradient orientation of a plurality of pixels contained in an image G2 captured by the imaging device 40. By utilizing the brightness gradient orientation histogram, the estimation section 23 identifies a brightness gradient orientation $\theta2$ which represents edges Ev in a vertical-direction that represents a gravitational direction, and a brightness gradient orientation 01 which represents edges Eh in a horizontal-direction that represents a direction perpendicular to the gravitational direction. The estimation section 23 estimates the roll angle $\delta$ of the vehicle 1, i.e., the roll angle of the imaging device 40 by utilizing at least one of the identified brightness gradient orientation $\theta2$ of the vertical-direction edges Ev or the identified brightness gradient orientation 01 of the horizontal-direction edges Eh. In an example in Fig. 16, the estimation section 23 identifies brightness gradient orientations $\theta1$ and $\theta2$ of mutually perpendicular two peaks Peak1 and Peak2 out of the brightness gradient orientation histogram, as the brightness gradient orientation 01 which represents the horizontal-direction edges Eh and the brightness gradient orientation $\theta2$ which represents the vertical-direction edges Ev.

[Overall Configuration of Motorcycle]

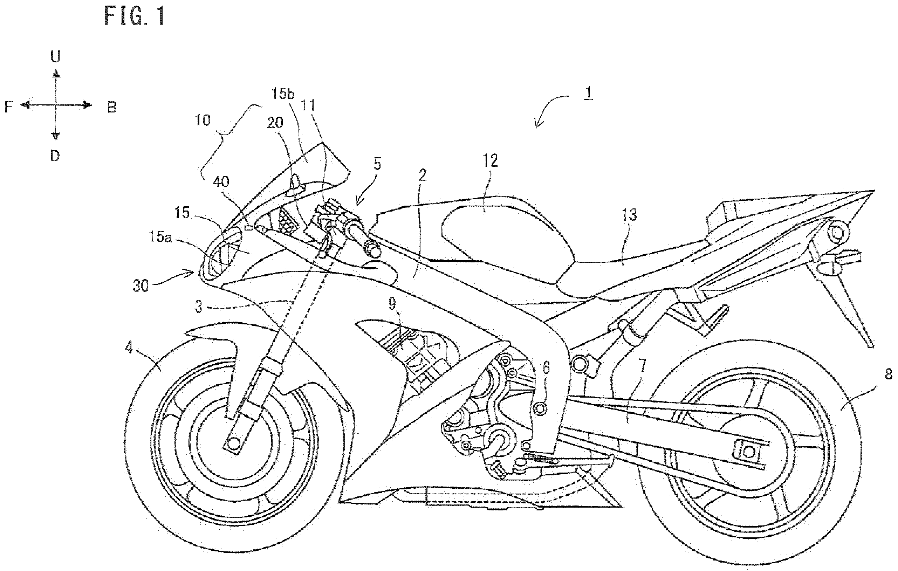

Fig. 1 is a side view of the vehicle 1 in Embodiment 1. The vehicle 1 is provided by a motorcycle as an example of vehicles which are inclinable in a left-right direction with respect to a traveling direction. In Fig. 1, Arrow F indicates a forward direction of the vehicle. Arrow B indicates a rearward direction of the vehicle. Arrow U indicates an upward direction of the vehicle. Arrow D indicates a downward direction of the vehicle. A direction which is perpendicular to both the vehicle's fore-aft direction and the up-down direction is the vehicle's left-right direction.

The vehicle 1 includes a head pipe 11, a frame 2, a front fork 3, a front wheel 4, a handlebar 5, a rear arm 7, a rear wheel 8 and an engine 9. The head pipe 11 is at a front of the frame 2. Above the head pipe 11, the handlebar 5 is attached rotatably. Below the head pipe 11 is the front fork 3. The front fork 3 has a lower end portion, where the front wheel 4 is attached rotatably.

The head pipe 11 is connected with the frame 2. The frame 2 extends rearward of the vehicle 1 from the head pipe 11. The frame 2 has its rear end portions curved downward. A pivot shaft 6 is provided at a rear end of the frame 2. The rear arm 7 has its front end portion attached to the pivot shaft 6, and the rear arm 7 is supported around the pivot shaft 6 to pivot up and down. The rear arm 7 has its rear portion, where the rear wheel 8 is attached rotatably.

Below the frame 2 is the engine 9. The engine 9 is mounted onto the frame 2 via a support plate. Above the frame 2 is a fuel tank 12. Behind the fuel tank 12 is a seat 13.

A front cover 15 is provided at a front portion of the vehicle. The front cover 15 has a windshield 15b on its upper portion. The front cover 15 further has an opening 15a. A head light unit 30 is exposed from the opening 15a behind the front cover 15.

The vehicle 1 further includes a vehicle-use roll-angle estimation system 10. The vehicle-use roll-angle estimation system 10 includes an imaging device 40 and a roll-angle estimation device 20. The imaging device 40 is provided by, for example, a camera which is capable of taking forward images from the vehicle 1. The imaging device 40 is attached to the front cover 15. The imaging device 40 is disposed so that its optical axis aligns with a rearward direction with respect to its traveling direction, i.e., disposed in alignment with the fore-aft direction of the vehicle 1. The imaging device 40 is attachable at an intermediate region in the left-right direction of the vehicle 1. When the vehicle 1 is inclined to the left or right with respect to the traveling direction, an angle of roll of the imaging device 40 (an angle of rotation about the optical axis; hereinafter called roll angle) changes. It is preferable that the imaging device 40 is attached to the vehicle 1 in such a way that a left-right direction (horizontal axis) of the imaging device 40 aligns with the left-right direction (horizontal axis) of the vehicle 1.

The roll-angle estimation device 20 analyzes an image taken by the imaging device 40, thereby calculating a roll angle estimation value of the imaging device 40. The roll-angle estimation device 20 is attached to the head pipe 11 and is connected with the imaging device 40. The connection between the imaging device 40 and the roll-angle estimation device 20 may be by means of wire or radio.

The roll-angle estimation device 20 includes a memory to record data of the images taken by the imaging device 40, and a computer (microcomputer) having a processor for processing image data. It should be noted here that the roll-angle estimation device 20 may be provided entirely or partially by a circuit (hardware). Embodiments of the present teaching also include programs for the computer to operate as the histogram generator 22 and the estimation section 23; and a non-transitory storage medium in which such programs are recorded.

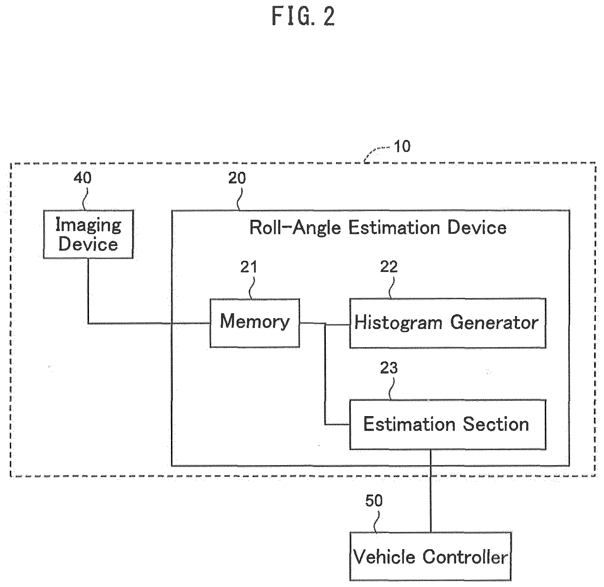

Fig. 2 is a function block diagram which shows an arrangement example of the vehicle-use roll-angle estimation system 10. In the example shown in Fig. 2, the roll-angle estimation device 20 includes a memory 21, the histogram generator 22 and the estimation section 23. The memory 21 stores data of images taken by the imaging device 40, data used in the image processing, and data generated in the image processing. The roll-angle estimation device 20 obtains images taken by the imaging device 40, and records them in the memory 21. Data representing an image includes pixel values of each of a plurality of pixels which are arranged in a matrix pattern. The data of an image is recorded as pixel values at each point in two-dimensional x-y coordinates, for example. In this case, each point in the x-y coordinates represents one pixel, and the pixel values include a value which indicates a brightness (concentration) of the pixel. Hereinafter, description will assume that in an image, the direction of pixel rows (lateral direction) represents the x-direction while column (upright) direction represents the γ-direction.

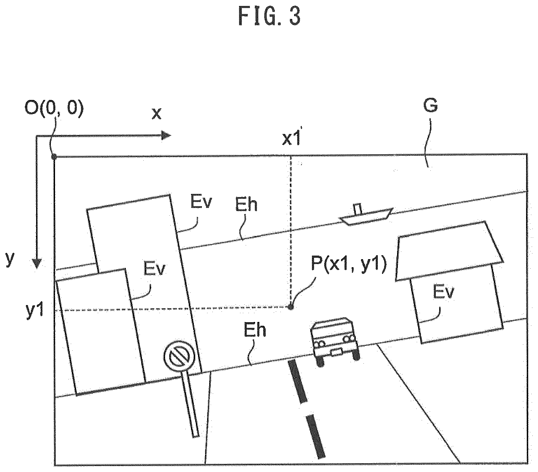

Fig. 3 shows an example of an image G taken by the imaging device 40. As shown in Fig. 3, the present embodiment takes, as an example, a position represented by a top left pixel in the image G as (x, y)=(0,0), i.e., the point of origin in the x-y coordinates. A pixel which is the x1-st from the left and the y1-st from the top in the image G is expressed as (x, y)=(x1, y1) in the coordinates. Herein, an up-down direction of the image G represents the γ-direction and a lateral direction represents the x-direction. Note that x-direction may sometimes be called horizontal axis of the image G while the γ-direction may sometimes be called vertical axis of the image G.

Hereinafter, the gravitational direction will be called vertical direction while an orthogonal direction to the vertical direction or a direction perpendicular to the vertical direction will be called horizontal direction. The image G taken by the imaging device 40 contains vertical-direction edges Ev and horizontal-direction edges Eh. The image G shown in Fig. 3 is an image taken when the vehicle 1 is inclined to the right. Because of this the vertical-direction edges Ev are inclined with respect to the vertical axis (y-direction) of the image G by the same angle as the inclination angle of the vehicle 1. Likewise, the horizontal-direction edges Eh are inclined with respect to the horizontal axis (x-direction) of the image G by the same angle as the inclination angle of the vehicle 1.

It should be noted here that the imaging device 40 is capable of imaging continuously at a predetermined interval (capable of taking a movie). In this case, a plurality of images taken continuously are recorded in the memory 21 in such a way that sequential order of the taken images is identifiable. In this case, each image may be called frame.

The histogram generator 22 generates a brightness gradient orientation histogram which shows a frequency distribution of brightness gradient orientation of a plurality of pixels contained in the image. The histogram generator 22 calculates a brightness gradient orientation in each pixel, and calculates a frequency of brightness gradient orientation for each of a plurality of sections (classes) which are defined by dividing an entire range of the brightness gradient orientations. A brightness gradient orientation histogram, which is a set of data indicating frequencies in the plurality of sections, is generated.

The brightness gradient orientation may be calculated as a value which indicates a direction of brightness change in a pixel located around a target pixel. The brightness gradient orientation is perpendicular to the direction of edges in the image. In the brightness gradient orientation histogram, the frequency value in each section may be a value obtained by adding a weighted value as many times as the frequency. The value of the weight may be, for example, a value based on brightness gradient intensity in each pixel. The plurality of sections defined by dividing the entire range of the brightness gradient orientation may be predetermined. An example of a histogram generation process will be described later.

The estimation section 23 estimates a roll angle of the imaging device 40 of the time at which the image was taken, by utilizing the brightness gradient orientation histogram generated by the histogram generator 22. Note that since the imaging device 40 is mounted on the vehicle 1, the roll angle of the imaging device 40 changes as the inclination of the vehicle 1 in the left-right direction changes. For this reason, estimating the roll angle of the imaging device 40 is equivalent to estimating the inclination angle in the left-right direction of the vehicle 1.

Specifically, the estimation section 23 identifies an inclination of the edges in the vertical direction in the image which represents the gravitational direction and an inclination of the edges in the horizontal direction in the image which represents the direction perpendicular to the gravitational direction, from the brightness gradient orientation histogram. In other words, the estimation section 23 determines how much the vertical-direction edges and horizontal-direction edges of the objects captured in the image are inclined with respect to the reference axis (e.g., x-direction) of the image.

By utilizing at least one of the identified inclinations, i.e., the inclination of the vertical-direction edges or the inclination of the horizontal-direction edges, the estimation section 23 calculates an estimated value of the roll angle. The estimation section 23 may, for example, make a conversion on an angle of the vertical-direction edges or the horizontal-direction edges with respect to the reference axis of the image as needed, and make the obtained value as the estimated value of the roll angle.

In the above-described vehicle-use roll-angle estimation process, the estimation section 23 may, for example, select two mutually perpendicular peaks from peaks in the brightness gradient orientation histogram, and identify two brightness gradient orientations represented by the two selected peaks, as an inclination of the vertical-direction edges with respect to the reference axis of the image, and as an inclination of the horizontal-direction edges with respect to the reference axis of the image.

In this case, the estimation section 23 detects peaks in the frequency distribution of the brightness gradient orientation histogram. Next, the estimation section 23 calculates an angle between two brightness gradient orientations represented by the two peaks out of a plurality of peaks that were detected. If it is determined that the calculated angle is 90 degrees (or within a predetermined range from 90 degrees), these two peaks may be selected as the mutually perpendicular two peaks. It should be noted here that the estimation section 23 may also select the above-described two peaks, from those peaks which have peak values that satisfy a predetermined set of conditions.

From the brightness gradient orientations of the selected two peaks, the estimation section 23 may select one of the directions which has a smaller inclination with respect to the vertical axis of the image (y axis) than a first threshold value, as the direction of the vertical-direction edge, while selecting the other of the directions which has a larger inclination with respect to the vertical axis of the image (y axis) than the first threshold value, as the direction of the horizontal-direction edge, thereby converting the inclination of the horizontal-direction edge or the vertical-direction edge with respect to the reference axis (e.g., x-direction) of the image into a value which indicates the roll angle.

Where the imaging device 40 taking movies, the estimation section 23 may sequentially calculate the estimated value of the roll angle for each of a plurality of frames which are taken sequentially. This enables to generate chronical data of the roll angles.

The estimated value of the roll angle calculated by the estimation section 23 is utilized, for example, in a control provided by a vehicle controller 50. Vehicle control using the roll angle is not limited to specific ones. For example, the vehicle controller 50 may use a distance from a bottom edge of the image to a bottom edge of an object captured in the image, to measure an actual distance from the vehicle to the actual object. Based on the distance to the object, the vehicle controller 50 may control braking or throttling. In this case, the vehicle controller 50 may first use the roll angle of the imaging device 40 to correct the image, and then calculate the distance from the bottom edge of the image to the bottom edge of an object captured in the image. This enables accurate measurement of the distance to the object even in cases where the vehicle 1 is inclined to the left-right direction and the roll angle of the imaging device 40 is changed.

For example, when the vehicle 1 is inclined to the left or right with respect to its traveling direction, images taken by the imaging device 40 are also inclined. As the image is inclined, the distance from the bottom edge of the image to the bottom edge of an object is altered. In this case, the vehicle controller 50 rotates the image in a reverse direction of the roll angle by the same amount calculated by the estimation section 23. From a distance between the bottom edge of the rotated image to the bottom edge of an object therein, it is possible to calculate an actual distance from the vehicle to the object. This enables accurate measurement of the distance from the vehicle 1 to an object even when the vehicle 1 is inclined.

When measuring the distance from the vehicle 1 to an object using an image as described above, it is preferable that the roll angle calculated by the estimation section 23 does not have an error greater than one degree. In cases where an acceleration sensor or a gyro sensor is used in measurement of the inclination angle of the vehicle 1, a few degrees of error must be accepted in general, and therefore it is difficult to accurately measure the distance from the vehicle 1 to an object by using values from these sensors in image processing. Also, the conventional roll-angle estimation device disclosed in Japanese Patent Application Publication No. 2015-58915 does not assume a case where an image analysis by an estimated roll angle is used for the measurement of a distance to an object on the move. Because of this, the device does not provide estimation accuracy and processing speed suitable for image analysis to be used in distance measurement and so on. On the contrary, the roll-angle estimation device 20 according to the present embodiment is capable of calculating the roll angle within an error range of 1 degree. Therefore, it is possible to accurately measure the distance from the vehicle 1 to an object by means of image processing using the roll angle calculated by the estimation section 23 of the roll-angle estimation device 20.

Also, the vehicle controller 50 is capable of controlling the vehicle 1 by using the roll angle calculated in the estimation section 23 as an inclination angle in the left-right direction of the vehicle 1. In this case, the estimation section 23 serves as an outputting device of inclination angles of the vehicle 1. In other words, the roll-angle estimation device 20 may be regarded as a vehicle inclination angle calculator which uses image data. The vehicle controller 50 may, based on the inclination angle of the vehicle 1, controls braking force, driving power, and attitude of the vehicle 1, for example. In the driving power control, an amount of fuel injection, ignition timing, degree of throttle opening, etc. may be adjusted by using the inclination angle calculated by the roll-angle estimation device 20, for example. In the attitude control, suspension may be controlled by using the inclination angle calculated by the roll-angle estimation device 20, for example. It should be noted here that the vehicle controller 50 may be provided by a circuit(s) mounted on one or a plurality of substrates or a processor.

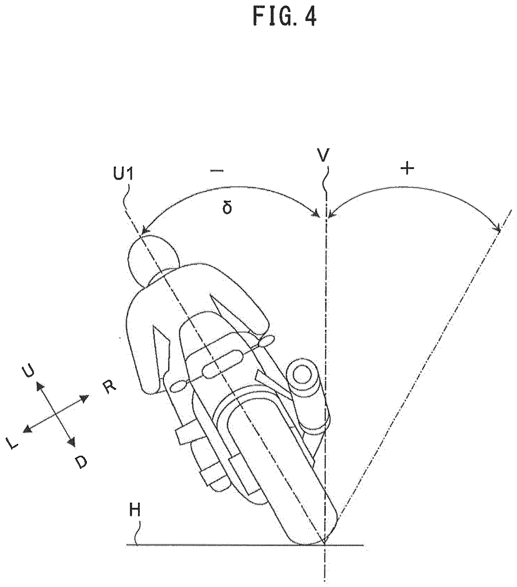

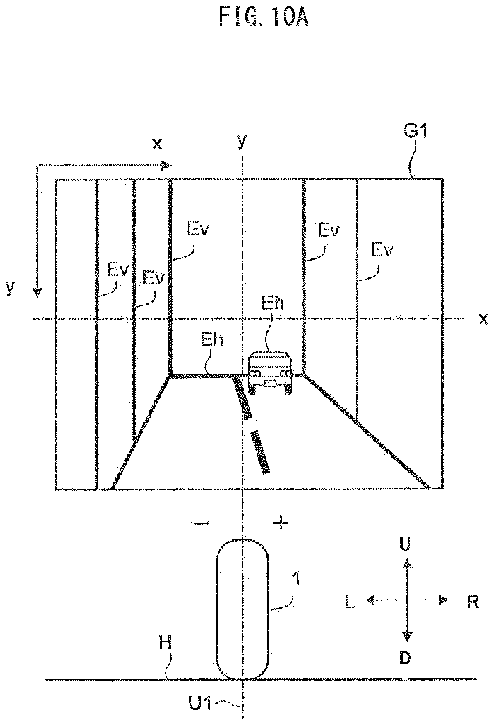

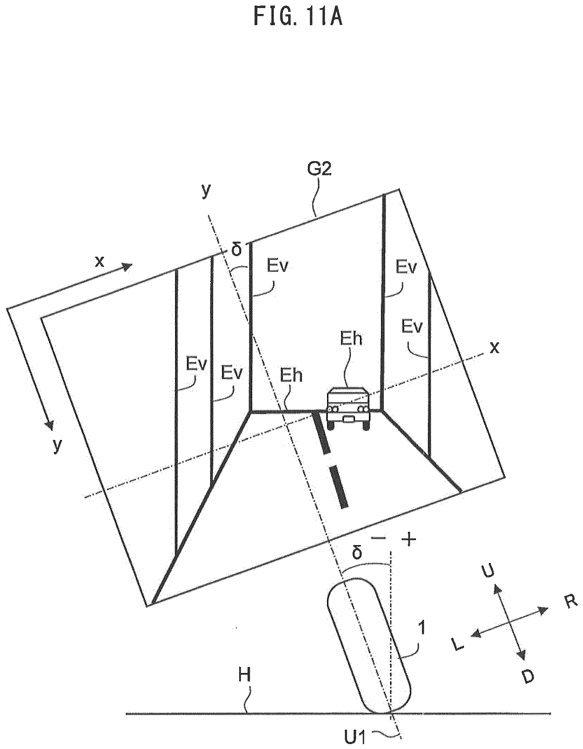

Fig. 4 is a drawing for describing an inclination angle of the vehicle 1. In Fig. 4, Arrow L indicates a leftward direction of the vehicle. Arrow R indicates a rightward direction of the vehicle. Arrow U indicates an upward direction of the vehicle. Arrow D indicates a downward direction of the vehicle. A direction which is perpendicular to both of the vehicle's left-right direction and the vehicle's up-down direction is the vehicle's fore-aft direction. The directions indicated by these Arrows L, R, U and D are the same in Fig. 10A and Fig. 11A.

As shown in Fig. 4, an inclination angle $\delta$ is provided by an angle between a vertical-directional line V which extends in the gravitational direction and a line U1 which extends in the up-down direction of the vehicle 1. In the present embodiment, as an example, description will be made for a case where the inclination angle $\delta$ is positive (+) when the up-down direction line U1 is on the right side toward the forward traveling direction of the vehicle 1 with respect to the vertical line V; the inclination angle $\delta$ is negative (-) when the line is on the left side; and the inclination angle $\delta$=0 when the vertical line V and the up-down direction line U1 overlap with each other.

[Operation Example]

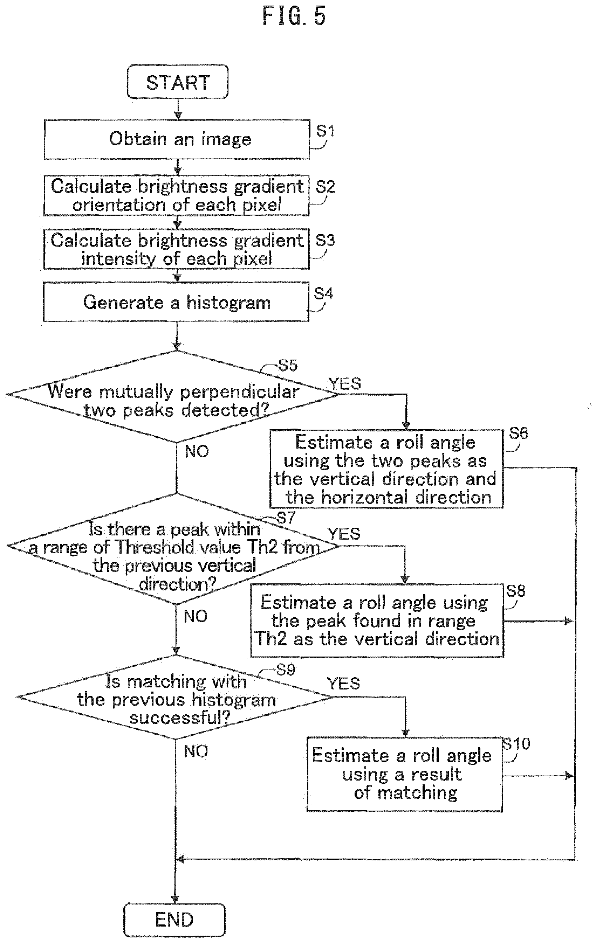

Fig. 5 is a flow chart which shows an operation example of a roll-angle estimation device 20 shown in Fig. 2. Fig. 5 shows a case where an estimated value of the roll angle is calculated for one image out of a plurality of images which are captured in sequence, i.e., a plurality of frames. The roll-angle estimation device 20 obtains an image (Step S1). From images taken by the imaging device 40, the roll-angle estimation device 20 records data of one image in the memory 21, so as to be accessible by the processor of the roll-angle estimation device 20.

<Histogram Generation Process>

In Steps S2 through S4, the histogram generator 22 uses the image data to generate a brightness gradient orientation histogram, i.e., data which indicates frequency distribution of a brightness gradient orientation. In this histogram generation process, the histogram generator 22 calculates a brightness gradient orientation and a brightness gradient intensity of each pixel (Steps S2, S3).

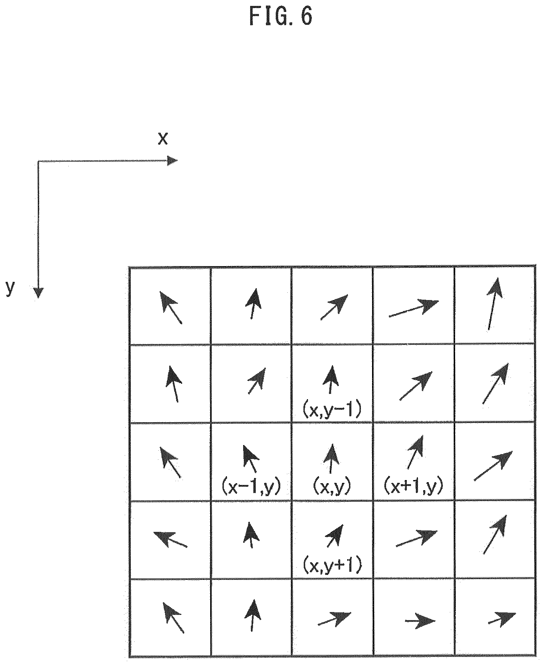

Fig. 6 shows an example of brightness gradient orientations around a pixel of focus which is located at coordinates (x, y). Herein, description will cover an example of calculating the brightness gradient orientation and the brightness gradient intensity for a pixel of focus (x, y). The histogram generator 22 obtains a brightness gradient fx (x, y) in x-direction and a brightness gradient fy (x, y) in $\gamma$-direction at a location (x, y) of the pixel of focus, from brightness values of adjacent pixels which are located above and below, left and right of the pixel of focus. The brightness gradients fx(x, y) in x-direction and fy(x, y) in $\gamma$-direction can be calculated with the following Mathematical Expression (1). In the following Mathematical Expression (1), L(a, b) represent pixel values at (a, b).
[Math 1]

$$\begin{cases} f_x(x,y) = L(x+1,y) - L(x-1,y) \\ f_y(x,y) = L(x,y+1) - L(x,y-1) \end{cases} \qquad (1)$$

A brightness gradient intensity m(x, y) of the pixel of focus can be calculated by placing the fx(x, y), fy(x, y) into the following Mathematical Expression (2).
[Math 2]

$$m(x,y) = \sqrt{f_x(x,y)^2 + f_y(x,y)^2} \qquad (2)$$

A brightness gradient orientation $\theta$(x, y) of the pixel of focus can be obtained by placing the fx(x, y), fy(x, y) into the following Mathematical Expression (3).
[Math 3]

$$\theta(x,y) = \tan^{-1} \frac{f_y(x,y)}{f_x(x,y)} \qquad (3)$$

The histogram generator 22 calculates the brightness gradient orientation θ and the brightness gradient intensity m, for each of a plurality of pixels within a predetermined area in the image. Using the brightness gradient orientation θ and the brightness gradient intensity m of the plurality of pixels, the histogram generator 22 generates a brightness gradient orientation histogram (Step S4 in Fig. 5).

In calculating the brightness gradient orientation, the Mathematical Expression (3) gives the brightness gradient orientation θ in terms of an angle of the image with respect to x-direction. In other words, x-direction is used as the reference axis of the image and the brightness gradient orientation is expressed as an angle with respect to the reference axis. In this case, the brightness gradient orientation θ may take a value not smaller than 0 degree and not greater than 360 degrees. By equating an angle θ with an angle (θ+180 degrees), the histogram generator 22 is capable of generating a brightness gradient orientation histogram within a range of the angle θ (not smaller than 0 degree and not greater than 180 degrees).

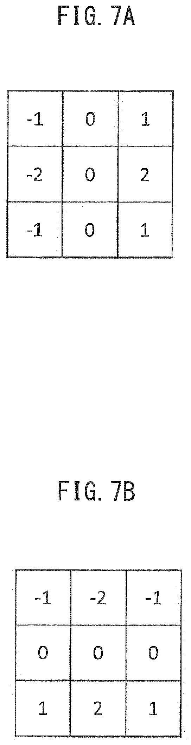

It should be noted here that the method for calculating the x-direction brightness gradient fx(x, y) and y-direction brightness gradient fy(x, y) is not limited to the example given above. For example, it is possible to calculate fx(x, y), fy(x, y) using a Sobel filter shown in Fig. 7(a) and Fig. 7(b). Fig. 7(a) shows a Sobel filter used in calculating the x-direction brightness gradient, while Fig. 7(b) shows a Sobel filter used in calculating the y-direction brightness gradient. In this case, the x-direction brightness gradient fx(x, y) can be calculated with the following Mathematical Expression (4), and the y-direction brightness gradient fy(x, y) can be calculated with the following Mathematical Expression (5).

[Math 4]

$$fx(x, y) \quad = \sum_{i=1}^{3} \sum_{j=1}^{3} a_{ij} L(x - 2 + i, \; y - 2 + j)$$

$$\text{———} \; (4)$$

[Math 5]

$$fy(x, y) \quad = \sum_{i=1}^{3} \sum_{j=1}^{3} b_{ij} L(x - 2 + i, \; y - 2 + j)$$

$$\text{———} \; (5)$$

In the Mathematical Expression (4), aij represents a value of an element located in the i-th row of the j-th column in a 3-row, 3-column matrix in which each element shows a value of a filter shown in Fig. 7(a). In the Mathematical Expression (5), bij represents a value of an element located in the i-th row of the j-th column in a 3-row, 3-column matrix in which each element shows a value of a filter shown in Fig. 7(b). It should be noted here that the Sobel filter is not limited to a 3-row, 3-column filter.

In Step S4 in Fig. 5, the histogram generator 22 counts the number of pixels (frequency) having a brightness gradient orientation which falls in any of a plurality of sections defined by dividing the range of brightness gradient orientation θ (not smaller than 0 degree not greater than 180 degrees). The plurality of sections may be provided, for example, by quantifying the range of possible values of the brightness gradient orientation θ (not smaller than 0 degree not greater than 180 degrees) to a plurality of values (e.g., 0, 1, 2, ..., 180). For each section, the histogram generator 22 records the frequency or an additional value assigned for a weighted value of that frequency, in the memory 21. The frequency or the additional value in each section constitute the brightness gradient orientation histogram which indicates the frequency distribution of the brightness gradient orientation. In this process, the histogram generator 22 is capable of generating data of the frequency distribution of brightness gradient orientation for a plurality of pixels contained in a predetermined area in the image.

As an example, with the range for calculation represented by a letter r, and brightness gradient orientations to be quantified represented by A=(0, 1, 2, 3, 4, ..., 180), a brightness gradient orientation histogram H [r] can be calculated with the following Mathematical Expression (6). In the example shown in the following Mathematical Expression (6), a brightness gradient intensity m(x, y) is voted as a weight to each section.

[Math 6]

$$H[r] = \sum_{x,y \in r} \sum_{a \in A} \begin{cases} m(x,y) & [\theta(x,y)] = a \\ 0 & \text{otherwise} \end{cases} \quad (6)$$

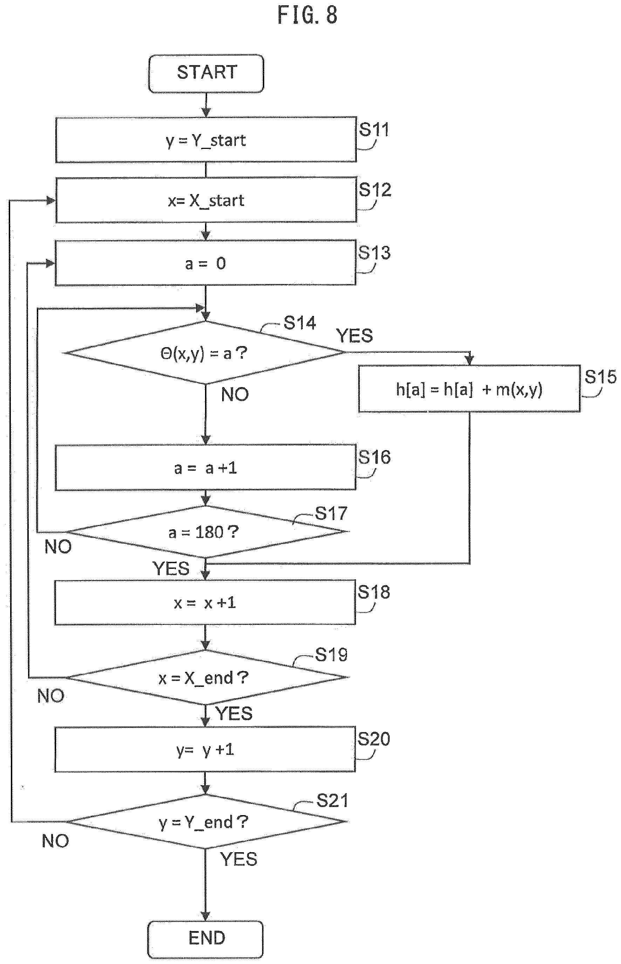

Fig. 8 is a flow chart which shows an example of a process when the histogram generator 22 performs a calculation according to Mathematical Expression (6). The histogram generator 22 initializes: a variable x which indicates an x coordinate of the pixel; a variable y which indicates a y coordinate of the pixel; and a variable a which indicates each section of the brightness gradient orientation (Steps S11, S12, S13). In Fig. 8, X_start is an initial value of x, while Y_start is an initial value of Y. It should be noted here that the process shown in Fig. 8 is a process of generating a brightness gradient orientation histogram for pixels contained in an area defined by x=[X_start, X_end], y=[Y_start, Y_end].

In the pixel of focus at coordinates (x, y), if the brightness gradient orientation θ(x, y) is identical with a (Step S14: YES), the histogram generator 22 adds the brightness gradient intensity m(x, y) to a frequency value h(a) of the section representing that a (Step S15). In other words, the brightness gradient intensity is voted as a weight. If the brightness gradient orientation θ(x, y) is not identical with a (Step S14: NO), one is added to a (Step S16), i.e., determination at Step S14 is executed. Thus, a weighted value based on the brightness gradient intensity is voted to a corresponding one of the values (a=0, 1, 2, 3, ...180) of the quantified brightness gradient orientation. It should be noted here that Step S14 determines whether or not θ(x, y) and a are identical with each other; however, in cases where a indicates an area of a section, a determination is made on whether or not θ(x, y) is included in the section indicated by a.

Once the voting process is complete for a pixel of focus (YES in Step S17 or end of Step S15), the variable x is increased by the value of one (Step S18), and again a voting process is performed for a pixel indicated by Steps S13 through S17. When the variable x reaches its upper limit value X_end (Step S19: YES), the variable y is increased by a value of one (Step S20), and then voting processes are performed for a row of pixel group indicated by Step S12 through S19. When the variable y reaches its upper limit value Y_end (Step S21: YES), the process comes to an end.

Following the process shown in Fig. 8, for each of the values (a=0, 1, 2, 3, ... 180) of the quantified brightness gradient orientation θ, a value h(a) is generated as a value which includes added brightness gradient intensity value of the corresponding pixel, and is recorded as data which indicate frequency distribution, i.e., a brightness gradient orientation histogram. It should be noted here that the histogram generation process it not limited to the example described above. For example, the above-described plurality of sections defined by dividing a range into which the brightness gradient orientation θ can fall may be sections each having a range (such as 0 through 1.4 degrees, 1.5 through 2.4 degrees, 2.5 through 3.4 degrees,... 179.4 through 180 degrees). Also, each section in the brightness gradient orientation histogram may not have a weighted value but have a frequency value itself.

<Roll-Angle Estimation Process When Two Peaks are Detected>

Once the histogram generator 22 generates a brightness gradient orientation histogram in Step S4 in Fig. 5 as described above, the estimation section 23 makes a search into the brightness gradient orientation histogram to detect two peaks which represent the mutually perpendicular brightness gradient orientations (Step S5). In Step S5, the estimation section 23 detects peaks in the brightness gradient orientation histogram.

The estimation section 23 is capable of performing, for example, an extreme value detection process to the brightness gradient orientation histogram, to detect peaks. For example, a section having a greater count (frequency) than a predetermined threshold value may be detected as a peak section in the brightness gradient orientation. Another example may be to compare a peak value (peak strength) with a predetermined threshold value to determine success or failure of a peak detection. For example, there may be an arrangement where if the peak has a value which is smaller than a threshold value, the estimation section 23 determines that the result is invalid and will not treat this peak as a peak in the later part of the process.

If a plurality of peaks are detected, the estimation section 23 calculates an angle between any two brightness gradient orientations out of the plurality of peaks, to see if the angle is 90 degrees. In this determination, there may be an arrangement where the estimation section 23 will determine that the angle formed by the two brightness gradient orientations is 90 degrees if the angle is within a predetermined range from 90 degrees. This enables detection of two peaks which have mutually perpendicular brightness gradient orientations.

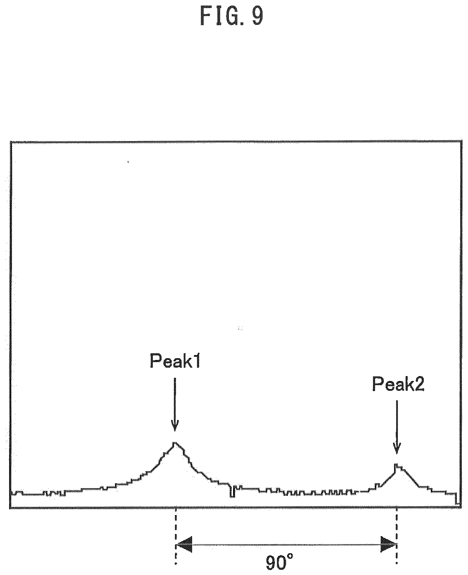

Fig. 9 shows an example of two peaks which represent mutually perpendicular brightness gradient orientations in a brightness gradient orientation histogram. In Fig. 9, Peak 1 and Peak 2 are the mutually perpendicular two peaks. The brightness gradient orientation of Peak 1 and the brightness gradient orientation of Peak 2 are mutually perpendicular to each other.

If two mutually perpendicular peaks are detected (Step S5: YES), the estimation section 23 calculates a roll angle of the imaging device 40 (Step S6) using two brightness gradient orientations of the two detected peaks as an edge direction representing the horizontal direction and an edge direction representing the vertical direction. In the present embodiment, the brightness gradient orientation is expressed as an angle with respect to the x-direction (horizontal axis).

For example, the estimation section 23 can select, from brightness gradient orientations 01, θ2 of the mutually perpendicular two peaks, one (e.g., 01) which has a smaller angle (deviation) from the vertical axis of the image (y axis) than a first threshold value Th1, as an inclination of the vertical-direction edges with respect to the x-direction, and determine an estimated value of the roll angle. In other words, it is possible to calculate a roll angle on a basis that the up-down direction line of the imaging device 40 is inclined by -01 with respect to the vertical direction, i.e., the gravitational direction. The estimation section 23 can convert the angle between the vertical-direction edge and the x-direction into an angle between the up-down direction of the imaging device 40 (i.e., the up-down direction of the vehicle) and the gravitational direction, i.e., the vertical direction, and regard the converted angle as the roll angle. For example, in a case where the roll angle of the imaging device 40 is expressed in the same way as the inclination angle of the vehicle 1, namely as an angle of the up-down direction line of the imaging device 40 with respect to the vertical direction (positive values mean right-hand side while negative values mean left-hand side toward the forward traveling direction), the roll angle $\alpha$ can be calculated as $\alpha=01-90$. In this case, the roll angle $\alpha$ is equal to the inclination angle of the vehicle 1.

Also, the estimation section 23 can select, from brightness gradient orientations 01, θ2 of the mutually perpendicular two peaks, one (e.g., θ2) which has a greater angle (deviation) from the vertical axis of the image (y axis) than the first threshold value Th1, as an inclination of the horizontal-direction edge with respect to x-direction, and determine an estimated value of the roll angle. In other words, it is possible to calculate a roll angle on the basis that the left-right direction line of the imaging device 40 is inclined by -θ2 with respect to the horizontal direction which is perpendicular to the gravitational direction. The estimation section 23 can convert the angle between the horizontal-direction edge and the x-direction into an angle between the up-down direction of the imaging device 40 (i.e., the up-down direction of the vehicle) and the vertical direction (i.e., the gravitational direction), and regard the converted angle as the roll angle. For example, in a case where the roll angle of the imaging device 40 is expressed in the same way as the inclination angle of the vehicle 1, namely as an angle of the up-down direction line of the imaging device 40 with respect to the vertical direction, the roll angle $\alpha$ can be calculated as $\alpha=\theta2-180$ when 02 is greater than 180-Th1 ($\theta2>180-Th1$) and the roll angle can be calculated as $\alpha=\theta2$ when 02 is smaller than Th1 ($\theta2<Th1$). In this case, the roll angle $\alpha$ is equal to the inclination angle of the vehicle 1.

As an example, if the first threshold value Th1 is given as 45 degrees, then the peak brightness gradient orientation $\theta$ can be converted into the roll angle $\alpha$ (=vehicle's inclination angle), using the following Mathematical Expression (7):
[Math 7]

$$\alpha = \begin{cases} \theta - 180 & \theta > 135 \ (\text{Vertical: Negative Roll Angle}) \\ \theta & \theta < 45 \ (\text{Vertical: Positive Roll Angle}) \\ \theta - 90 & \text{otherwise (Horizontal)} \end{cases} \quad (7)$$

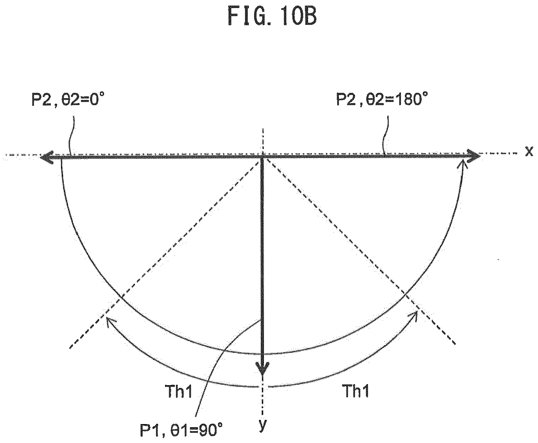

Fig. 10A shows an example relationship between an image and an inclination of the vehicle 1, where the image was taken when the vehicle 1 had an inclination angle of zero degree in its left-right direction. Fig. 10B shows an example of the two peaks which are detected in the image shown in Fig. 10A. In the example shown in Fig. 10A, the vehicle 1 does not have an inclination in its left-right direction and therefore, lines of edges Ev in the vertical direction (the gravitation direction) of objects captured in the image G1 extend in the direction perpendicular to the x-direction of the image G1. Lines of edges Eh in the horizontal direction, which are perpendicular to the gravitational direction, extend in the same direction as the x-direction of the image G1.

Fig. 10B shows angles, with respect to the x-direction, of the two peaks P1, P2, which are detected from a brightness gradient orientation histogram of the image G1 shown in Fig. 10A as having mutually perpendicular brightness gradient orientations. In Fig. 10B, the peaks P2 which have brightness gradient orientations of θ2=0 degree and 180 degrees represent vertical-direction edges Ev in the image G1 of Fig. 10A. As has been described earlier, 0 degree and 180 degrees may be equated with each other. The edge directions in the image and the brightness gradient orientation cross with each other at a right angle. Therefore, the peak P1 in Fig. 10B which has a brightness gradient orientation of θ1=90 degrees represents horizontal-direction edges Eh in the image G1 of Fig. 10A.

In the example shown in Fig. 10A and Fig. 10B, the estimation section 23 selects, from brightness gradient orientations 01, θ2 of the two peaks, 01 which has a smaller angle from the vertical axis of the image (y axis) than the first threshold value Th1, as the inclination of the vertical-direction edges Ev with respect to the x-direction, and determines an estimated value of the roll angle. In this case, the roll angle $\alpha$ is calculated as $\alpha=01-90=0$. It is also possible for the estimation section 23 to select, from the brightness gradient orientations 01 and 02 of the two peaks P1 and P2, θ2 which has a greater angle from the y axis of the image than the first threshold value Th1, as an inclination of the horizontal-direction edges Eh with respect to the x-direction, and determine an estimated value of the roll angle. In this example, 02=0 gives θ2<Th1 and therefore, the roll angle $\alpha$ is calculated as $\alpha$=θ2=0. In the case where 02=180, the case gives θ2>Th1+90 and therefore, the roll angle $\alpha$ is calculated as $\alpha$=θ2-180=0. It should be noted here that an absolute value of $\alpha$ is identical with an absolute value of $\delta$.

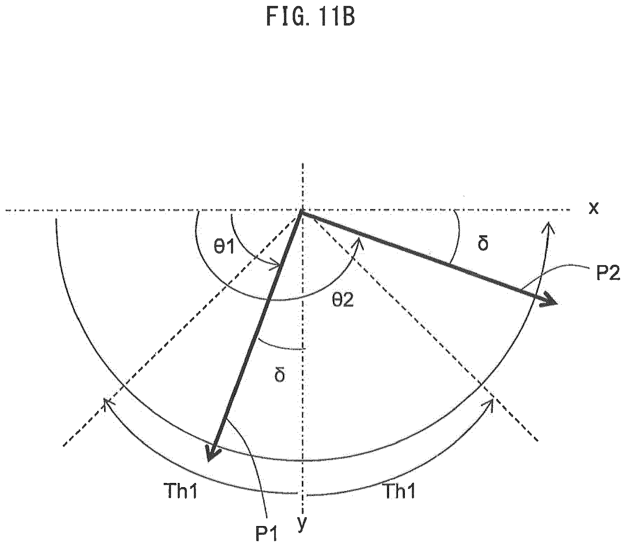

Fig. 11A shows an example relationship between an image and an inclination of the vehicle 1 where the image was taken when the vehicle 1 had an inclination angle of which is not zero degree in its left-right direction. Fig. 11B shows an example of the two peaks which are detected in the image shown in Fig. 11A. In the example shown in Fig. 11A, an up-down direction line U1 of the vehicle 1 is inclined by the angle $\delta$ to the left (minus side) with respect to the vertical direction, i.e., the gravitational direction. Therefore, lines of the vertical-direction edges Ev of objects captured in image G2 are inclined by the angle $\delta$ with respect to γ-direction of the image G2. Lines of the horizontal-direction edges Eh are inclined by the angle $\delta$ with respect to the x-direction of the image G2.

Fig. 11B shows angles, with respect to the x-direction, of the two peaks P1, P2, which are detected from a brightness gradient orientation histogram of the image G2 shown in Fig. 11A, as having mutually perpendicular brightness gradient orientations. In Fig. 11B, the peak P2 which has a brightness gradient orientation of θ2 represents vertical-direction edges Ev in the image G2 of Fig. 11A. In Fig. 11B, the peak P1 which has a brightness gradient orientation of θ1 represents horizontal-direction edges Eh in the image G2 of Fig. 11A.

In the example shown in Fig. 11A and Fig. 11B, the estimation section 23 selects, from brightness gradient orientations 01 and θ2 of the two peaks P1 and P2, 01 which has a smaller angle from the vertical axis of the image (y axis) than the first threshold value Th1, as the inclination of the vertical-direction edges Ev with respect to x-direction, and determines an estimated value of the roll angle. In this case, the roll angle $\alpha$ is calculated as $\alpha$=θ1-90.

It is also possible for the estimation section 23 to select, from the brightness gradient orientations θ1 and θ2 of the two peaks P1 and P2, θ2 which has a greater angle from the y axis of the image than the first threshold value Th1, as an inclination of the horizontal-direction edges Eh with respect to the x-direction, and determine an estimated value of the roll angle. In this example where θ2>Th1+90, the roll angle $\alpha$ is calculated as $\alpha$=θ2-180. It should be noted here that an absolute value of $\alpha$ is identical with an absolute value of $\delta$.

It should be noted here that the above example does not limit the process of calculating the roll angle of the imaging device 40 by using an inclination of the vertical-direction edges or horizontal-direction edges with respect to a reference line of the image. The estimation section 23 may use a calculation which is different from the example shown above, to convert an angle of the vertical-direction edges or the horizontal-direction edges with respect to the reference axis of the image, into an angle made by the roll angle of the imaging device 40 with respect to the reference axis, or an angle made by the inclination angle of the vehicle 1 with respect to the reference axis. The reference axis for the roll angle of the imaging device 40 or the reference axis for the inclination angle of the vehicle 1 is not limited to any specific one. The above example shows a process in a case where an optical axis of the imaging device 40 is the same as the traveling direction of the vehicle 1 and the left-right direction of the imaging device 40 is the same as the left-right direction of the vehicle 1. In cases where at least one of the optical axis or the left-right direction of the imaging device 40 has a deviation from those of the vehicle, it is possible to calculate the roll angle or the inclination angle by having the estimation section 23 perform a conversion process which takes the deviation into account.

<Roll-Angle Estimation Process using Previous Roll-Angle Estimation Results>

In cases where Step S5 in Fig. 5 cannot detect the mutually perpendicular two peaks (Step S5: NO), the estimation section 23 selects a peak (Step S7), from those peaks in the brightness gradient orientation histogram, which has a brightness gradient orientation having an angle difference from a brightness gradient orientation that represents previously identified vertical-direction edges not greater than a second threshold value Th2, as a peak representing current vertical-direction edges. Using a brightness gradient orientation of the selected peak, the estimation section 23 estimates a current roll angle (Step S8).

In this case, a direction which is perpendicular to the brightness gradient orientation of the peak selected as the peak which represents the vertical-direction edges indicates the vertical direction of objects in the image. The estimation section 23 can then take a direction which is perpendicular to a brightness gradient orientation of this selected peak; identify an inclination to this direction with respect to the reference axis of the image (x-direction) as the direction of the vertical-direction edges; and calculate a roll angle.

The process in Step S7 enables, even when the mutually perpendicular two peaks are not detectable, to detect a peak which represents vertical-direction edges. It becomes possible in Step S8, to estimate a roll angle from a brightness gradient orientation of the peak which represents the vertical-direction edges. Hence, roll-angle estimation is possible in both cases where the image contains more horizontal-direction edges and more vertical-direction edges than others, and where the image contains more edges in only one of the categories than others.

The second threshold value Th2 may be a predetermined value, or may be a value which is calculated on the basis of, for example, the time of taking the previous image (an image of the previous frame) and the time of taking the current image (an image of the current frame). For example, it is possible to calculate the second threshold value Th2 based on a predetermined angular velocity upper limit of the vehicle roll angle and a time passed between the previous image taking and the current image taking. By having the second threshold value Th2 which is based on the upper limit of the vehicles roll angular velocity, it becomes possible to track the peak in the vertical direction over a plurality of frames.

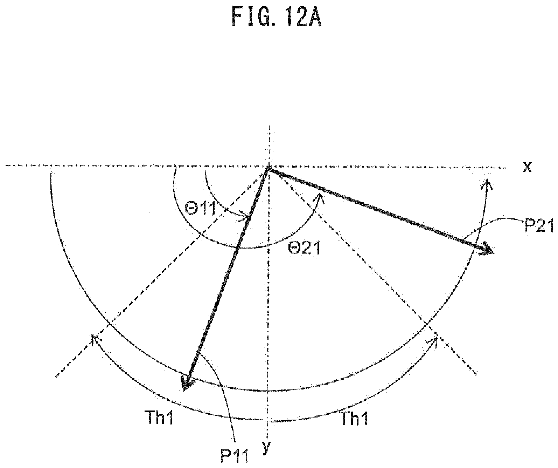

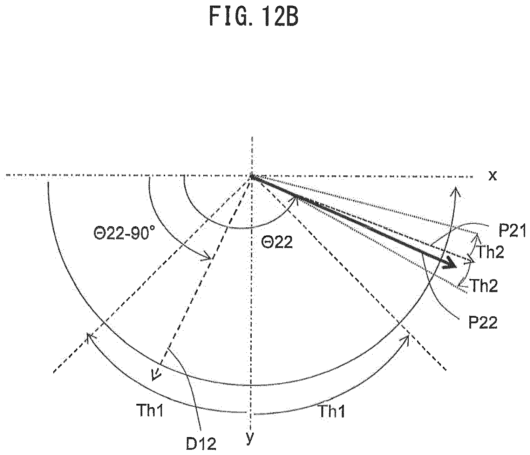

Fig. 12A and Fig. 12B show an example of estimating the vertical direction in an image in a current frame, based on the vertical direction detected in an immediately preceding frame (hereinafter, called previous frame). The current frame is a frame for which a roll-angle estimation is to be made. Fig. 12A shows brightness gradient orientations of the mutually perpendicular two peaks P11, P21 which were detected in the previous frame. In Fig. 12A, Peak P11 of a brightness gradient orientation whose inclination with respect to the $\gamma$-direction is smaller than the first threshold value Th1 represents horizontal-direction edges of objects in the image. Peak P21 represents vertical-direction edges of the objects in the image.

Fig. 12B shows a brightness gradient orientation of Peak P22 detected in the current frame. If, for example, an image contains only a limited number of horizontal-direction edges, there is a small number in the frequency of brightness gradient orientation which represents the horizontal-direction edges, and a peak which represents the horizontal-direction edges will not be detected in the brightness gradient orientation histogram. In such a case, two peaks which have a mutually perpendicular relationship are not detected, but as shown in Fig. 12B, it is likely that only one peak is detected. Note that Fig. 12B also shows a brightness gradient orientation of Peak P21 which was detected in the previous frame in a broken line.

In the example shown in Fig. 12B, the estimation section 23 selects Peak P22 which has a brightness gradient orientation within the range of the second threshold value Th2 from the brightness gradient orientation of Peak P21 which was identified as representing the vertical-direction edges in the previous frame, as a peak which represents the vertical-direction edges in the current frame. Using a brightness gradient orientation $\theta22$ of the selected peak P22, the estimation section 23 calculates a roll angle of the imaging device 40. For example, it is possible to convert an angle $\theta22-90$ of D12 which is perpendicular to the brightness gradient orientation $\theta22$ into a roll angle $\alpha=\theta22-90-90$.

In the example shown in Fig. 12A and Fig. 12B, a comparison is made between the brightness gradient orientation of the peak in the previous frame and the brightness gradient orientation of the peak in the current frame. Alternatively, the estimation section 23 may compare values obtained by converting the brightness gradient orientations into roll angles or inclination angles. Also, the frame to be compared with the current frame is not limited to the immediately previous frame; a frame which is two-frames or more-frames away may be selected as a target of comparison with the current frame.

As an example, the estimation section 23 may use an angular velocity upper limit, the second threshold value Th2=$\Delta\alpha$ and a roll-angle estimation result $\alpha$t-1 in the past, to determine a range, or an upper limit value and a lower limit value, of the peak which represents vertical-direction edges in the current frame, using the following Mathematical Expression (8). The second threshold value Th2=$\Delta\alpha$ is calculated by using a time passed from the image taking in the previous frame to the image taking in the current frame. The upper limit value and the lower limit value have sometimes a cyclicity.

[Math 8]

$$\text{Where } \alpha t-1 \geq 0 \qquad \left[\alpha_{t-1} - \Delta\alpha, \ \alpha_{t-1} + \Delta\alpha\right]$$

$$\text{Where } \alpha t-1 < 0 \qquad \left[(180 + \alpha_{t-1}) - \Delta\alpha, (180 + \alpha_{t-1}) + \Delta\alpha\right] \qquad (8)$$

The estimation section 23 searches the brightness gradient orientation histogram for a peak found in the range determined by the threshold value Th2. There may be an arrangement where if a peak is detected within the range, the estimation section 23 checks a value (strength) of the detected peak, to determine whether or not the peak should be taken as a peak which represents the vertical-direction edges.

<Roll-Angle Estimation Process using Past Brightness Gradient Orientation Histogram>

If Step S7 in Fig. 5 cannot find a peak which satisfies the conditions (Step S7: NO), the estimation section 23 performs a shape matching of a past brightness gradient orientation histogram and the current brightness gradient orientation histogram (Step S9). Using a result of the matching, the estimation section 23 calculates a roll angle displacement from a point in time earlier than the current or actual time until the actual time, and estimates a current roll angle from the roll angle displacement and the past roll angle (Step S10).

As described, even if Step S5 fails to detect two peaks and then Step S7 fails to detect a peak, it is possible with Step S9 to track the vertical direction through matching of brightness gradient orientation histograms. For example, in cases where an image contains fewer vertical-direction edges and horizontal-direction edges than edges in other directions, it is likely that peaks of brightness gradient orientations which represent the vertical direction and the horizontal direction are not distinctive in the brightness gradient orientation histogram. In such a case, if there are peaks which represent edges in other directions in a series of a plurality of images, it is possible, through matching, to identify a matching relationship of the peaks in the series of the plurality of images. By using the peak matching relationship in the plurality of images, it is possible to calculate a roll angle displacement in the series of the plurality of images. Hence, roll-angle estimation is also possible, in addition to cases where the image contains more horizontal-direction edges and more vertical-direction edges than others, and where the image contains more edges in only one of the categories than others, in cases where the image contains less edges in both the categories than others.

The estimation section 23 performs matching between, for example, a shape of the brightness gradient orientation histogram in the previous frame and a shape of the brightness gradient orientation histogram in the current frame. In the matching process, the estimation section 23 compares, for example, position and strength of one or more peaks in the brightness gradient orientation histogram of the previous frame with one or more peaks in the brightness gradient orientation histogram of the current frame. The estimation section 23 calculates a result of the comparison in the form of a score which indicates a degree of matching of a peak distribution. Then, the relative positional relationship in angular direction between the brightness gradient orientation histogram of the previous frame and the brightness gradient orientation histogram of the current frame is changed, and the calculation of the comparison and scoring is repeated. Through this process, a relative positional relationship which gives a better score is determined. In other words, the angle between the brightness gradient orientation histograms of the previous frame and of the current frame is varied and a degree of peak matching is evaluated to find an angular displacement which gives the best match. This gives an amount of angular displacement between the previous frame and the current frame. The estimation section 23 can calculate this amount of angular displacement as a roll angle displacement from the previous frame.

With the process shown in Fig. 5 as the above, it is possible to estimate, solely from information contained in taken images, a roll angle of the imaging device 40 and an inclination angle of the vehicle 1. In other words, a roll angle estimation depending only on image is now possible, which no longer requires parameter adjustment for each vehicle 1 for example. Also, roll-angle estimation accuracy is not very much affected by vibration of the traveling vehicle 1.

(Embodiment 2)

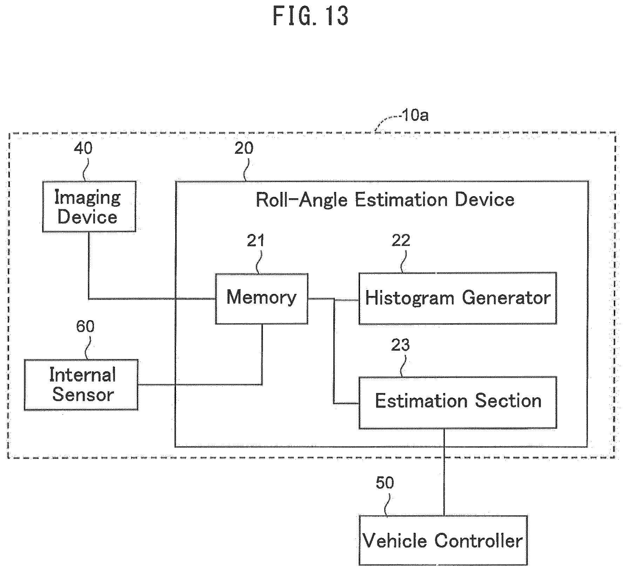

Fig. 13 is a function block diagram which shows an arrangement example of the vehicle-use roll-angle estimation system 10a in Embodiment 2. The vehicle-use roll-angle estimation system 10a can be mounted on the vehicle 1 as shown in Fig. 1. In Fig. 13, the same components as found in Fig. 2 are indicated with the same reference symbols. The vehicle-use roll-angle estimation system 10a shown in Fig. 13 is the arrangement shown in Fig. 2, with an addition of an internal sensor 60.

The internal sensor 60 may be provided by, for example, a gyro sensor, an acceleration sensor or a combination of these. The internal sensor 60 outputs an inclination angle of the vehicle 1 and records it in the memory 21. Or, by using sensor information from the internal sensor 60, the estimation section 23 can calculate an inclination angle of the vehicle or a roll angle of the imaging device 40. For example, in cases where the internal sensor 60 includes a gyro sensor, it is possible to calculate the inclination angle of the vehicle 1 based on a roll rate (angular velocity) outputted from the gyro sensor. In cases where the internal sensor 60 includes an acceleration sensor, it is possible to calculate the inclination angle of the vehicle 1 using G from the acceleration sensor.

By using the inclination angle of the vehicle 1 detected by the internal sensor 60, the estimation section 23 can make a complementation of the roll angle estimated by the estimation section 23. The estimation section 23 may use the inclination angle detected by the internal sensor 60 as the vehicle's inclination angle in cases where it was impossible to estimate a roll angle based on the brightness gradient orientation histogram obtained from the image.

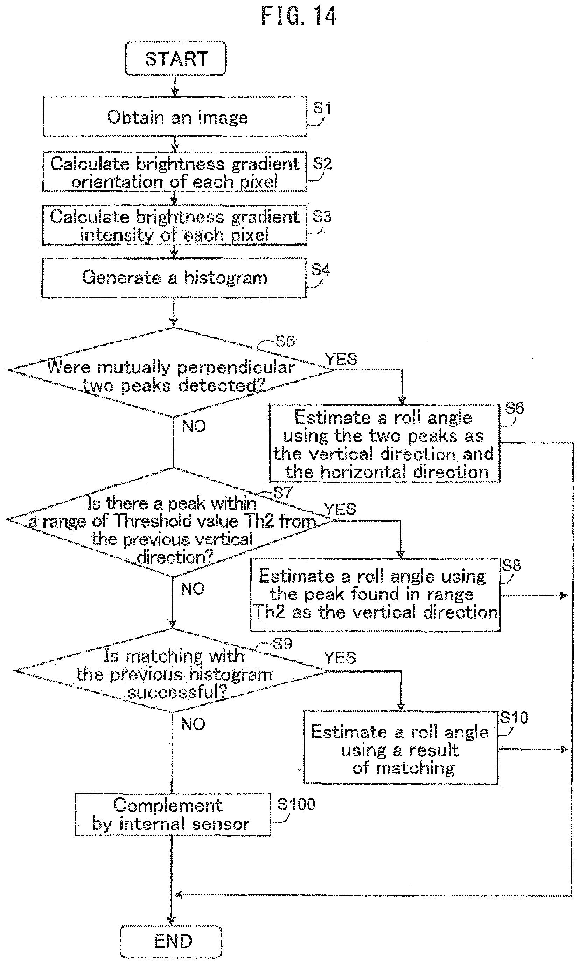

Fig. 14 is a flow chart which shows an operation example of a roll-angle estimation device 20 in Fig. 13. In Fig. 14, it is possible to execute Step S1 through S1O in a similar way as Step S1 through S10 in Fig. 5. When Step S9 fails to do matching of brightness gradient orientation histograms (Step S9: NO), the estimation section 23 reads out an inclination angle detected by the internal sensor 60 from the memory 21 and makes it a roll angle of the imaging device 40.

In cases where the internal sensor 60 includes a gyro sensor and other sensors (e.g., acceleration sensor), the estimation section 23 may first use, in Step S100, an angular velocity which is obtained from the gyro sensor to calculate an inclination angle of the vehicle 1 or a roll angle of the imaging device 40. If this roll angle calculation is made within a predetermined time from the execution of the process in Step S5, the estimation section 23 may skip complementation based on information from the acceleration sensor, and ends the process. If the predetermined time has elapsed, the estimation section 23 executes the complementation process as well, using the information from the acceleration sensor. The angular velocity obtained from the gyro sensor is a useful piece of information with a reasonably small range of error if utilized within a short period of time. Therefore, there may be an arrangement where the estimation section 23 selects, depending on the time elapsed during the estimation process, between performing complementation based on information only from the gyro sensor and performing complementation using information from other sensors as well.

Also, by using the inclination angle of the vehicle 1 detected by the internal sensor 60, the estimation section 23 can verify the roll angle of the imaging device 40 estimated by the estimation section 23. For example, in a case where the estimation section 23 estimated a roll angle $\alpha$ of the imaging device 40 as $\alpha$=A, there may be a verification process to see if a difference between $\alpha$=A and an inclination angle detected by the internal sensor is within a predetermined range, for determination that $\alpha$=A is correct. If the difference of the inclination angle is out of the predetermined range, the process can determine that $\alpha$=A is not correct. As an example, if a roll angle $\alpha$=A which was estimated in Step S6 is determined as faulty, then the estimation section 23 may use other means such as tracking on the vertical-direction components (Step S7) or histogram matching (Step S9) to estimate an inclination angle for further verification.

In Embodiment 1 and Embodiment 2 described thus far, when two peaks in the brightness gradient orientation histogram representing two brightness gradient orientations which have a mutually perpendicular relationship are detected as indicating brightness gradient orientations in the vertical direction and the horizontal direction, then it is possible to estimate a roll angle with a high level of accuracy. For this reason, the vehicle-use roll-angle estimation system can determine accuracy of an estimated value of the roll angle by checking whether or not two peaks which represent two brightness gradient orientations that have a mutually perpendicular relationship are detected in the brightness gradient orientation histogram.

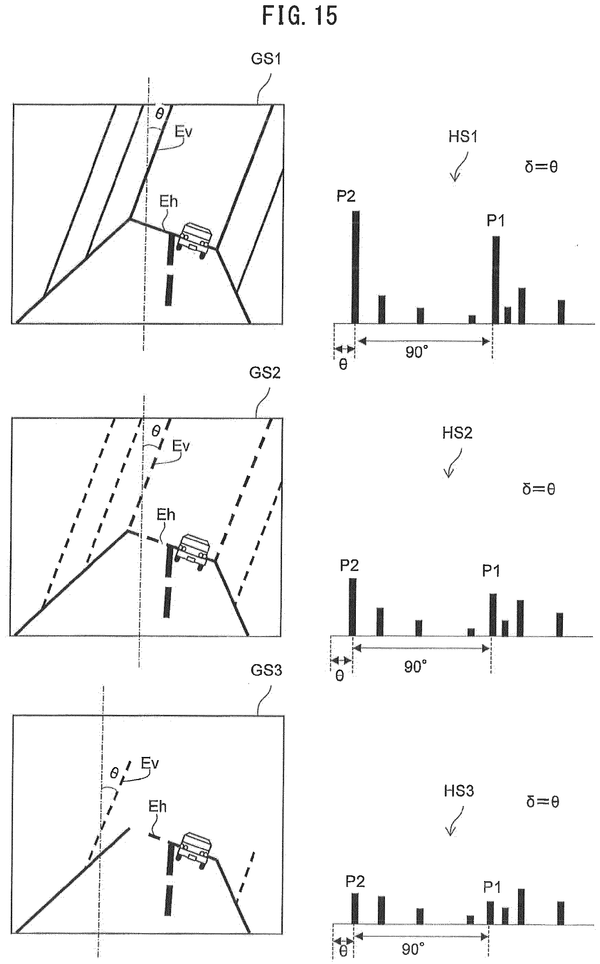

Fig. 15 show an example of roll angle estimation using a vehicle-use roll-angle estimation system according to Embodiment 1 or Embodiment 2 described above. Fig. 15 shows examples of the images GS1, GS2, GS3 which are inputted to the vehicle-use roll-angle estimation system, and of brightness gradient orientation histograms HS1, HS2, HS3 of these images. The images GS1, GS2, GS3 are examples of images obtained when the imaging device 40 takes forward images from the vehicle 1 while the vehicle 1 is moving on a travel surface. In the image GS1, vertical-direction edges Ev and horizontal-direction edges Eh account for a high percentage in all of the edges contained in the image. In the image GS2, vertical-direction edges Ev and horizontal-direction edges Eh account for a smaller percentage than in the image GS1 with respect to all of the edges. In the image GS3, vertical-direction edges Ev and horizontal-direction edges Eh account for a smaller percentage than in the image GS2 with respect to all of the edges.

Hence, in the brightness gradient orientation histogram HS1 of the image GS1, two peaks P1, P2 representing two brightness gradient orientations which have a mutually perpendicular relationship are selected. Peak P2 is selected as a peak of a brightness gradient orientation which represents the vertical-direction edges. Peak P1 is selected as a peak of a brightness gradient orientation which represents the horizontal-direction edges. These peaks P1, P2 have a higher intensity than other peaks. The selected peak P2 has an inclination $\theta$ with respect to the reference axis of the image, and using this angle an inclination angle $\delta$ of the vehicle 1 in the left-right direction is calculated. As an example, $\delta$=$\theta$.

In the brightness gradient orientation histogram HS2 of the image GS2, two peaks P1, P2 representing two brightness gradient orientations which have a mutually perpendicular relationship are selected. Peak P2 is selected as a peak of a brightness gradient orientation which represents the vertical-direction edges. Peak P1 is selected as a peak of a brightness gradient orientation which represents the horizontal-direction edges. These peaks have a similar intensity to other peaks. In this case, again, the selected peak P2 has an inclination $\theta$ with respect to the reference axis of the image, and using this angle an inclination angle $\delta$ of the vehicle 1 in the left-right direction is calculated (e.g., $\delta$=$\theta$).

In the brightness gradient orientation histogram HS3 of the image GS3, two peaks P1, P2 representing two brightness gradient orientations which have a mutually perpendicular relationship are selected. Peak P2 is selected as a peak of a brightness gradient orientation which represents the horizontal-direction edges. Peak P1 is selected as a peak of a brightness gradient orientation which represents the vertical-direction edges. These peaks P1, P2 have a lower intensity than other peaks. The selected peak P2 has an inclination $\theta$ with respect to the reference axis of the image, and using this angle an inclination angle $\delta$ of the vehicle 1 in the left-right direction is calculated (e.g., $\delta$=$\theta$).

As described, in Embodiment 1 and 2 described above, a peak which represents a brightness gradient orientation of vertical-direction edges and a peak which represents a brightness gradient orientation of the horizontal direction are identified to estimate a roll angle, and therefore it is possible to estimate the inclination angle $\delta$ of the vehicle 1 in left-right direction at a high accuracy. In particular, as exemplified by the image GS3 in Fig. 15, even in cases where an inputted image gives a vertical-edge brightness gradient orientation and a horizontal-edge brightness gradient orientation at a lower frequency in the brightness gradient orientation histogram, it is possible to estimate a roll angle as accurately as in cases of the image GS1 or the image GS2 which give higher frequency of brightness gradient orientation in the vertical edges and the horizontal edges. In other words, if a system is capable of estimating a roll angle even when such an image is inputted, it is reasonable to assume that the system executes a process of identifying the vertical brightness gradient orientation and the horizontal brightness gradient orientation.

The vehicle-use roll-angle estimation system according to Embodiments 1 and 2 is capable of estimating the roll angle at a high accuracy when it is given an image which gives two peaks having a 90-degree angle relationship in the brightness gradient orientation histogram even if both of the two peaks have a low intensity, or if one of the two peaks has a low intensity. According to the vehicle-use roll-angle estimation system in Embodiment 1 and 2 described above, even when an inputted image gives low intensity two peaks having a mutually perpendicular relationship in a brightness gradient orientation histogram, it is possible to estimate the roll angle with high accuracy as far as the peaks are detected. It should be noted here that in the brightness gradient orientation histogram, the mutually perpendicular two peaks do not mean only those two peaks whose difference in angle is exactly 90 degrees. Those two peaks whose difference in their range of brightness gradient orientations is away from 90 degrees by such an extent that they still can be regarded as brightness gradient orientations representing two edges in a mutually perpendicular relationship are determined as mutually perpendicular to each other.

For example, in conventional techniques described earlier where the roll angle is estimated by means of a method of calculating an average gradient of vertical-direction straight lines and an average gradient of horizontal-direction straight lines, or by means of a pattern matching of brightness gradient orientation histograms, it is difficult to accurately estimate the roll angle in cases where vertical-direction edges and horizontal-direction edges give small peaks of brightness gradient orientations, i.e., when the frequency of brightness gradient orientation of these is low.

Thus far, embodiments of the present teaching have been covered, but embodiments of the present teaching are not limited to those described above. For example, the vehicle-use roll-angle estimation system according to the present teaching is not limited in its application to motorcycles. The vehicle-use roll-angle estimation system according to the present teaching may be applied to straddled vehicles other than motorcycles (such as bicycles, auto tricycles, LMWs (Leaning Multi Wheels), snowmobiles, ATVs (All Terrain Vehicles), etc.) It should be noted here that the term straddled vehicles mean vehicles in general in which the operator of the vehicle rides on the vehicle as if riding a horse. Straddled vehicles include scooter-type vehicles, too. The present teaching is also applicable to vehicles other than the straddled type. The present teaching is applicable to lean vehicles which are inclinable to the left and right. The present teaching is applicable suitably to such a vehicle which inclines to the left and right when turning, i.e., vehicles which turn while leaning. The lean vehicles incline to the left when making a left turn, and incline to the right when making a right turn.

It should be noted here that the imaging device 40 is capable of imaging rearward, not forward. Further, the optical axis of the imaging device 40 does not necessarily have to be in the traveling direction. Also, the mounting location of the imaging device 40 is not limited to the front cover 15. For example, the place may be the handlebar 5, the head pipe 11, or others. The location of the roll-angle estimation device 20 is not limited to the head pipe 11. Also, both of the imaging device 40 and the roll-angle estimation device 20 may be mounted on the front cover 15 or on the head pipe 11. Also, the imaging device 40 and the roll-angle estimation device 20 may be housed in a single case, or in different cases from each other.

Operation of the roll-angle estimation device 20 is not limited to the examples shown in Fig. 5 and Fig. 14. In Fig. 5 and Fig. 14, at least one of the followings may be omitted: the roll-angle estimation process (Step S7 and S8) which makes use of the vertical direction identified from a previous vertical direction; or the roll-angle estimation process (Step S9 and S10) which makes use of a result of matching with a previous brightness gradient orientation histogram.

It should be noted here that the vehicle 1 is capable of recording or displaying the roll angles estimated by the vehicle-use roll-angle estimation system. Or, the vehicle is capable of performing vehicle control using the estimated roll angles. If the estimated roll angles are used in vehicle control, the estimated roll angles influence the control state (behavior) of the vehicle. This enables grasping the estimated roll angles from the control state of the vehicle.

Any special terms used in the present Description are used for the sole purpose of describing specific embodiments, and are not used with any intention of limiting the teaching.

The wording "and/or" used in the present description indicates all possible combinations including a single element and combinations of any of a plurality of elements mentioned.

Words such as "including", "comprising", "having" and the like, when used in the present Description affirm that there is such a characteristic, step, operation, element, component and/or equivalent as was described, but do not exclude existence or addition of any one or a plurality of other characteristics, steps, operations, elements, components and/or a group(s) of these.

Words such as "mounted", "connected", "coupled" and/or terms equivalent thereto when used in the present Description are used in a wide sense, including both direct and indirect ways of mounting, connecting and coupling. Further, "connected" and "coupled" are not limited to physical or mechanical connection or coupling in whichever direct or indirect ways, but possibly include electrical connection or coupling.

Unless otherwise defined, any terms (including technical terms and scientific terms) used in the present Description have the same meaning as generally understood by those who are skilled in the art.

Terms whose definitions can be found in dictionaries of general use should be interpreted as being used with the meaning in the context of relevant techniques and in the present disclosure, and should not be interpreted in an idealism or excessive formality unless expressively so defined in the present Description.

In the Description of the present teaching, it is understood that a plurality of techniques and steps are disclosed.

Each of these has individual effects, and each can be used in combination with one or more of the other techniques disclosed herein or, if applicable, can be used together with all the other techniques. For these reasons, the present Description refrains from unnecessarily repeating those individual steps in attempting to cover all possible combinations of these.

REFERENCE SIGNS LIST

1       Vehicle
20      Roll-Angle Estimation Device
22      Histogram Generator
23      Estimation Section
40      Imaging Device
60      Internal Sensor

**Claims**

1. A vehicle-use roll-angle estimation system (10) for mounting on a vehicle (1) which is inclinable to a left-right direction with respect to a traveling direction, comprising:

    an imaging device (40) capable of capturing forward or rearward images from the vehicle (1); and
    a roll-angle estimation device (20) configured to obtain an image captured by the imaging device (40) and to analyze the image, thereby estimating a roll angle of the imaging device (40) which changes as the vehicle's inclination changes,
    wherein
    the roll-angle estimation device (20) includes:

        a histogram generator (22) configured to generate a brightness gradient orientation histogram which shows a frequency distribution of a brightness gradient orientation of a plurality of pixels contained in the image; and **characterised by**:

            an estimation section (23) configured to identify, by using the brightness gradient orientation histogram, a brightness gradient orientation representing edges in a vertical direction that indicates the gravitational direction, and a brightness gradient orientation representing edges in a horizontal direction that indicates a direction perpendicular to the gravitational direction; and to then estimate the roll angle by using at least one of the identified brightness gradient orientation of the vertical-direction edges or the identified brightness gradient orientation of the horizontal-direction edges,
            wherein the estimation section (23) is configured to select, from brightness gradient orientations of two peaks which represent two brightness gradient orientations having a mutually perpendicular relationship identified among peaks in the brightness gradient orientation histogram, one which has a smaller inclination from the vertical axis of the image than a first threshold value as the brightness gradient orientation that represents the vertical-direction edges while selecting the other which has a greater inclination from the vertical axis of the image than the first threshold value as the brightness gradient orientation that represents the horizontal-direction edges
            and estimate the roll angle.

2. The vehicle-use roll-angle estimation system (10) according to Claim 1,
   wherein the histogram generator (22) is configured to equate, any angle $\theta$ not smaller than 0 degree and not greater than 180 degrees with an angle $\theta$ + 180 degrees, to thereby generate a brightness gradient orientation histogram within a range of the angle $\theta$ not smaller than 0 degree and not greater than 180 degrees.

3. The vehicle-use roll-angle estimation system (10) according to Claim 1 or 2,
   wherein the histogram generator (22) is configured to weight a brightness gradient intensity of each pixel, and thereafter adds the brightness gradient of each pixel to the histogram.

4. The vehicle-use roll-angle estimation system (10) according to Claim 1,

wherein the estimation section (23) is configured to
select a peak, from those in the brightness gradient orientation histogram, representing a brightness gradient orientation which has an angle from a brightness gradient orientation that represents previous vertical-direction edges not exceeding a second threshold value, as a peak of the brightness gradient orientation representing the vertical-direction edges; and
estimate a current roll angle using said peak brightness gradient orientation if it is impossible to select two peaks which are perpendicular to each other.

5. The vehicle-use roll-angle estimation system (10) according to Claim 1,
wherein the estimation section (23) is configured to
perform a shape matching between a past brightness gradient orientation histogram and a current brightness gradient orientation histogram thereby calculating a roll angle displacement from past until now, and
estimate a current roll angle from the roll angle displacement and the previous roll angle if it is impossible to select the mutually perpendicular two peaks.

6. The vehicle-use roll-angle estimation system (10) according to one of Claims 1 through 5, further comprising:

an internal sensor (60) configured to detect an inclination angle of the vehicle (1),
wherein the vehicle-use roll-angle estimation system (10) is configured to complement the roll angle which is estimated by the estimation section (23) using the inclination angle of the vehicle (1) which is detected by the internal sensor (60).

7. The vehicle-use roll-angle estimation system (10) according to one of Claims 1 through 5, further comprising:

an internal sensor (60) configured to detect an inclination angle of the vehicle (1),
wherein the vehicle-use roll-angle estimation system (10) is configured to verify the roll angle which is estimated by the estimation section (23) using the inclination angle of the vehicle (1) which is detected by the internal sensor (60).

8. The vehicle-use roll-angle estimation system (10) according to Claim 6,
wherein the vehicle-use roll-angle estimation system (10) is configured to verify the roll angle which is estimated by the estimation section (23) using the inclination angle of the vehicle (1) which is detected by the internal sensor (60).

9. A vehicle (1) which is inclinable to a left-right direction with respect to a traveling direction, comprising:
the vehicle-use roll-angle estimation system (10) according to one of Claims 1 through 8.

10. A vehicle-use roll-angle estimation method for estimation, in a vehicle (1) which is inclinable to a left-right direction with respect to a traveling direction, of a roll angle of an imaging device (40) which changes as the vehicle's inclination changes, by analyzing an image captured by the imaging device (40) capable of capturing forward or rearward images from the vehicle (1); the method comprising:

an image obtaining step of obtaining an image captured by the imaging device (40),
a histogram generation step of generating a brightness gradient orientation histogram which shows a frequency distribution of brightness gradient orientation of a plurality of pixels contained in the image;
**characterised by**:

an identification step in which a computer identifies, from brightness gradient orientations of two peaks which represent two brightness gradient orientations having a mutually perpendicular relationship among peaks in the brightness gradient orientation histogram, one which has a smaller inclination from the vertical axis of the image than a first threshold value as a brightness gradient orientation representing edges in a vertical direction while identifying the other which has a greater inclination from the vertical axis of the image than the first threshold value as a brightness gradient orientation representing edges in a horizontal direction, and
an estimation step in which the computer estimates the roll angle by using at least one of the identified brightness gradient orientation of the vertical-direction edges or the identified brightness gradient orientation of the horizontal-direction edges.

**Patentansprüche**

1. Ein System (10) zur Schätzung eines Wankwinkels bei der Fahrzeugnutzung zum Montieren an einem Fahrzeug (1), das in Bezug auf eine Fahrtrichtung in eine Links-Rechts-Richtung neigbar ist, wobei das System folgende Merkmale aufweist:

   eine Bilderzeugungsvorrichtung (40), die dazu in der Lage ist, vordere oder hintere Bilder von dem Fahrzeug (1) zu erfassen; und
   eine Wankwinkelschätzungsvorrichtung (20), die dazu ausgebildet ist, ein durch die Bilderzeugungsvorrichtung (40) erfasstes Bild zu erhalten und das Bild zu analysieren, wodurch ein Wankwinkel der Bilderzeugungsvorrichtung (40) geschätzt wird, der sich ändert, wenn sich die Neigung des Fahrzeugs ändert, wobei die Wankwinkelschätzungsvorrichtung (20) folgende Merkmale umfasst:

   einen Histogrammgenerator (22), der dazu ausgebildet ist, ein Helligkeitsgradientenausrichtungshistogramm zu erzeugen, das eine Häufigkeitsverteilung einer Helligkeitsgradientenausrichtung einer Mehrzahl von in dem Bild enthaltenen Pixeln zeigt; und
   **gekennzeichnet durch**

   einen Schätzungsabschnitt (23), der dazu ausgebildet ist, durch Verwenden des Helligkeitsgradientenausrichtungshistogramms eine Helligkeitsgradientenausrichtung, die Kanten in einer vertikalen Richtung darstellt, die die Gravitationsrichtung anzeigt, und eine Helligkeitsgradientenausrichtung, die Kanten in einer horizontalen Richtung darstellt, die eine Richtung senkrecht zu der Gravitationsrichtung anzeigt, zu identifizieren; und dann den Wankwinkel durch Verwenden von zumindest entweder der identifizierten Helligkeitsgradientenausrichtung der Kanten in vertikaler Richtung oder der identifizierten Helligkeitsgradientenausrichtung der Kanten in horizontaler Richtung zu schätzen, wobei der Schätzungsabschnitt (23) dazu ausgebildet ist, aus Helligkeitsgradientenausrichtungen von zwei Spitzenwerten, die zwei Helligkeitsgradientenausrichtungen mit einer zueinander senkrechten Beziehung darstellen, die unter Spitzenwerten in dem Helligkeitsgradientenausrichtungshistogramm identifiziert wird, eine, die eine kleinere Neigung von der vertikalen Achse des Bildes aufweist als ein erster Schwellenwert, als die Helligkeitsgradientenausrichtung auszuwählen, die die Kanten in vertikaler Richtung darstellt, während die andere, die eine größere Neigung von der vertikalen Achse des Bildes aufweist als der erste Schwellenwert, als die Helligkeitsgradientenausrichtung ausgewählt wird, die die Kanten in horizontaler Richtung darstellt; und den Wankwinkel zu schätzen.

2. Das System (10) zur Schätzung eines Wankwinkels bei der Fahrzeugnutzung gemäß Anspruch 1, bei dem der Histogrammgenerator (22) dazu ausgebildet ist, jeden beliebigen Winkel θ, der nicht kleiner ist als 0 Grad und nicht größer ist als 180 Grad, mit einem Winkel θ + 180 Grad gleichzusetzen, um dadurch ein Helligkeitsgradientenausrichtungshistogramm innerhalb eines Bereichs des Winkels θ zu erzeugen, der nicht kleiner als 0 Grad und nicht größer als 180 Grad ist.

3. Das System (10) zur Schätzung eines Wankwinkels bei der Fahrzeugnutzung gemäß Anspruch 1 oder 2, bei dem der Histogrammgenerator (22) dazu ausgebildet ist, eine Helligkeitsgradientenintensität jedes Pixels zu gewichten und danach den Helligkeitsgradienten jedes Pixels zu dem Histogramm hinzuzufügen.

4. Das System (10) zur Schätzung eines Wankwinkels bei der Fahrzeugnutzung gemäß Anspruch 1, bei dem der Schätzungsabschnitt (23) dazu ausgebildet ist, einen Spitzenwert aus denjenigen in dem Helligkeitsgradientenausrichtungshistogramm, der eine Helligkeitsgradientenausrichtung darstellt, die einen Winkel von einer Helligkeitsgradientenausrichtung aufweist, die vorherige Kanten in vertikaler Richtung darstellt, der einen zweiten Schwellenwert nicht überschreitet, als Spitze der Helligkeitsgradientenausrichtung auszuwählen, die die Kanten in vertikaler Richtung darstellt; und einen aktuellen Wankwinkel unter Verwendung der Spitzenwerthelligkeitsgradientenausrichtung zu schätzen, wenn es unmöglich ist, zwei Spitzenwerte auszuwählen, die senkrecht zueinander sind.

5. Das System (10) zur Schätzung eines Wankwinkels bei der Fahrzeugnutzung gemäß Anspruch 1, bei dem der Schätzungsabschnitt (23) dazu ausgebildet ist, eine Formanpassung zwischen einem vergangenen Helligkeitsgradientenausrichtungshistogramm und einem aktuellen Helligkeitsgradientenausrichtungshistogramm durchzuführen, wobei eine Wankwinkelverschiebung von der Vergangenheit in die Gegenwart berechnet wird, und

einen aktuellen Wankwinkel aus der Wankwinkelverschiebung und dem vorherigen Wankwinkel zu schätzen, wenn es unmöglich ist, die zwei zueinander senkrechten Spitzenwerte auszuwählen.

6. Das System (10) zur Schätzung eines Wankwinkels bei der Fahrzeugnutzung gemäß einem der Ansprüche 1 bis 5, das ferner folgende Merkmale aufweist:

einen Innensensor (60), der dazu ausgebildet ist, einen Neigungswinkel des Fahrzeugs (1) zu erfassen, wobei das System (10) zur Schätzung eines Wankwinkels bei der Fahrzeugnutzung dazu ausgebildet ist, den Wankwinkel zu ergänzen, der durch den Schätzungsabschnitt (23) unter Verwendung des Neigungswinkels des Fahrzeugs (1) geschätzt wird, der durch den Innensensor (60) erfasst wird.

7. Das System (10) zur Schätzung eines Wankwinkels bei der Fahrzeugnutzung gemäß einem der Ansprüche 1 bis 5, das ferner folgende Merkmale aufweist:

einen Innensensor (60), der dazu ausgebildet ist, einen Neigungswinkel des Fahrzeugs (1) zu erfassen, wobei das System (10) zur Schätzung eines Wankwinkels bei der Fahrzeugnutzung dazu ausgebildet ist, den Wankwinkel zu verifizieren, der durch den Schätzungsabschnitt (23) unter Verwendung des Neigungswinkels des Fahrzeugs (1) geschätzt wird, der durch den Innensensor (60) erfasst wird.

8. Das System (10) zur Schätzung eines Wankwinkels bei der Fahrzeugnutzung gemäß Anspruch 6, wobei das System (10) zur Schätzung eines Wankwinkels bei der Fahrzeugnutzung dazu ausgebildet ist, den Wankwinkel zu verifizieren, der durch den Schätzungsabschnitt (23) unter Verwendung des Neigungswinkels des Fahrzeugs (1) geschätzt wird, der durch den Innensensor (60) erfasst wird.

9. Ein Fahrzeug (1), das in Bezug auf eine Fahrtrichtung in eine Links-Rechts-Richtung neigbar ist, das folgendes Merkmal aufweist:

das System (10) zur Schätzung eines Wankwinkels bei der Fahrzeugnutzung gemäß einem der Ansprüche 1 bis 8.

10. Ein Verfahren zur Schätzung eines Wankwinkels bei der Fahrzeugnutzung zur Schätzung eines Wankwinkels einer Bilderzeugungsvorrichtung (40), der sich ändert, wenn sich die Neigung des Fahrzeugs ändert, bei einem Fahrzeug (1), das in Bezug auf eine Fahrtrichtung in eine Links-Rechts-Richtung neigbar ist, durch Analysieren eines Bildes, das von der Bilderzeugungsvorrichtung (40) erfasst wird, die dazu in der Lage ist, vordere oder hintere Bilder von dem Fahrzeug (1) zu erfassen, wobei das Verfahren folgende Schritte aufweist:

einen Bilderhalteschritt eines Erhaltens eines durch die Bilderzeugungsvorrichtung (40) erfassten Bildes, einen Histogrammerzeugungsschritt zum Erzeugen eines Helligkeitsgradientenausrichtungshistogramms, das eine Häufigkeitsverteilung der Helligkeitsgradientenausrichtung einer Mehrzahl von in dem Bild enthaltenen Pixeln zeigt;

**gekennzeichnet durch**

einen Identifizierungsschritt, bei dem ein Computer aus Helligkeitsgradientenausrichtungen von zwei Spitzenwerten, die zwei Helligkeitsgradientenausrichtungen mit einer zueinander senkrechten Beziehung unter Spitzenwerten in dem Helligkeitsgradientenausrichtungshistogramm darstellen, eine, die eine kleinere Neigung von der vertikalen Achse des Bildes aufweist als ein erster Schwellenwert, als eine Helligkeitsgradientenausrichtung identifiziert, die Kanten in einer vertikalen Richtung darstellt, während die andere, die eine größere Neigung von der vertikalen Achse des Bildes als der erste Schwellenwert aufweist, als eine Helligkeitsgradientenausrichtung identifiziert wird, die Kanten in einer horizontalen Richtung darstellt, und

einen Schätzungsschritt, bei dem der Computer den Wankwinkel durch Verwenden zumindest entweder der identifizierten Helligkeitsgradientenausrichtung der Kanten in vertikaler Richtung oder der identifizierten Helligkeitsgradientenausrichtung der Kanten in horizontaler Richtung schätzt.

**Revendications**

1. Système d'estimation d'angle de roulis lors de l'utilisation d'un véhicule (10) destiné à être monté sur un véhicule (1) qui peut s'incliner dans une direction gauche-droite par rapport à une direction de déplacement, comprenant:

un dispositif d'imagerie (40) à même de capturer des images en avant ou en arrière du véhicule (1); et

un dispositif d'estimation d'angle de roulis (20) configuré pour obtenir une image capturée par le dispositif d'imagerie (40) et pour analyser l'image, estimant ainsi un angle de roulis du dispositif d'imagerie (40) qui varie au fur et à mesure que varie l'inclinaison du véhicule,
dans lequel
le dispositif d'estimation d'angle de roulis (20) comporte:

un générateur d'histogramme (22) configuré pour générer un histogramme d'orientation de gradient de luminosité qui montre une répartition de fréquence d'une orientation de gradient de luminosité d'une pluralité de pixels contenus dans l'image; et
**caractérisé par**:

un segment d'estimation (23) configuré pour identifier, à l'aide de l'histogramme d'orientation de gradient de luminosité, une orientation de gradient de luminosité représentant les bords dans une direction verticale qui indique la direction gravitationnelle, et une orientation de gradient de luminosité représentant les bords dans une direction horizontale qui indique une direction perpendiculaire à la direction gravitationnelle; et pour ensuite estimer l'angle de roulis à l'aide d'au moins l'une parmi l'orientation de gradient de luminosité identifiée des bords de direction verticale ou l'orientation de gradient de luminosité identifiée des bords de direction horizontale,
dans lequel le segment d'estimation (23) est configurée pour
sélectionner, parmi les orientations de gradient de luminosité de deux crêtes qui représentent deux orientations de gradient de luminosité présentant un rapport perpendiculaire entre elles identifiées parmi les crêtes dans l'histogramme d'orientation de gradient de luminosité, une qui présente une inclinaison inférieure, par rapport à l'axe vertical de l'image, à une première valeur de seuil comme orientation de gradient de luminosité qui représente les bords de direction verticale, tout en sélectionnant l'autre qui présente une inclinaison supérieure, par rapport à l'axe vertical de l'image, à la première valeur de seuil comme orientation de gradient de luminosité qui représente les bords de direction horizontale, et
estimer l'angle de roulis.

2. Système d'estimation de l'angle de roulis lors de l'utilisation d'un véhicule (10) selon la revendication 1, dans lequel le générateur d'histogramme (22) est configuré pour égaliser tout angle $\theta$ non inférieur à 0 degré et non supérieur à 180 degrés avec un angle $\theta + 180$ degrés, pour ainsi générer un histogramme d'orientation de gradient de luminosité dans une plage de l'angle $\theta$ non inférieure à 0 degré et non supérieure à 180 degrés.

3. Système d'estimation de l'angle de roulis lors de l'utilisation d'un véhicule (10) selon la revendication 1 ou 2, dans lequel le générateur d'histogramme (22) est configuré pour pondérer une intensité de gradient de luminosité de chaque pixel, et ajoute ensuite le gradient de luminosité de chaque pixel à l'histogramme.

4. Système d'estimation de l'angle de roulis lors de l'utilisation d'un véhicule (10) selon la revendication 1, dans lequel le segment d'estimation (23) est configuré pour
sélectionner une crête, parmi celles de l'histogramme d'orientation de gradient de luminosité, représentant une orientation de gradient de luminosité qui présente un angle par rapport à une orientation de gradient de luminosité qui représente les bords de direction verticale précédents n'excédant pas une deuxième valeur de seuil, comme crête de l'orientation de gradient de luminosité représentant les bords de direction verticale; et
estimer un angle de roulis actuel à l'aide de ladite orientation de gradient de luminosité de crête s'il est impossible de sélectionner deux crêtes qui sont perpendiculaires entre elles.

5. Système d'estimation de l'angle de roulis lors de l'utilisation d'un véhicule (10) selon la revendication 1, dans lequel le segment d'estimation (23) est configuré pour
effectuer une mise en correspondance de forme entre un histogramme d'orientation de gradient de luminosité passé et un histogramme d'orientation de gradient de luminosité actuel, calculant ainsi un déplacement d'angle de roulis du passé à maintenant, et
estimer un angle de roulis actuel à partir du déplacement de l'angle de roulis et de l'angle de roulis précédent s'il est impossible de sélectionner les deux crêtes perpendiculaires entre elles.

6. Système d'estimation de l'angle de roulis lors de l'utilisation d'un véhicule (10) selon l'une des revendications 1 à 5, comprenant par ailleurs:

un capteur interne (60) configuré pour détecter un angle d'inclinaison du véhicule (1),
dans lequel le système d'estimation d'angle de roulis lors de l'utilisation d'un véhicule (10) est configuré pour compléter l'angle de roulis qui est estimé par le segment d'estimation (23) à l'aide de l'angle d'inclinaison du véhicule (1) qui est détecté par le capteur interne (60).

**7.** Système d'estimation de l'angle de roulis lors de l'utilisation d'un véhicule (10) selon l'une des revendications 1 à 5, comprenant par ailleurs:

un capteur interne (60) configuré pour détecter un angle d'inclinaison du véhicule (1),
dans lequel le système d'estimation de l'angle de roulis (10) lors de l'utilisation d'un véhicule est configuré pour vérifier l'angle de roulis qui est estimé par le segment d'estimation (23) à l'aide de l'angle d'inclinaison du véhicule (1) qui est détecté par le capteur interne (60).

**8.** Système d'estimation de l'angle de roulis lors de l'utilisation d'un véhicule (10) selon la revendication 6,
dans lequel le système d'estimation de l'angle de roulis lors de l'utilisation d'un véhicule (10) est configuré pour vérifier l'angle de roulis qui est estimé par le segment d'estimation (23) à l'aide de l'angle d'inclinaison du véhicule (1) qui est détecté par le capteur interne (60).

**9.** Véhicule (1) qui est inclinable dans une direction gauche-droite par rapport à une direction de déplacement, comprenant:
le système d'estimation de l'angle de roulis lors de l'utilisation d'un véhicule (10) selon l'une des revendications 1 à 8.

**10.** Procédé d'estimation de l'angle de roulis lors de l'utilisation d'un véhicule pour estimer, dans un véhicule (1) qui est inclinable dans une direction gauche-droite par rapport à une direction de déplacement, un angle de roulis d'un dispositif d'imagerie (40) qui change au fur et à mesure que change l'inclinaison du véhicule, en analysant une image capturée par le dispositif d'imagerie (40) à même de capturer des images en avant ou en arrière du véhicule (1); le procédé comprenant:

une étape d'obtention d'image consistant à obtenir une image capturée par le dispositif d'imagerie (40),
une étape de génération d'histogramme consistant à générer un histogramme d'orientation de gradient de luminosité qui montre une répartition de fréquence de l'orientation de gradient de luminosité d'une pluralité de pixels contenus dans l'image;
**caractérisé par**:

une étape d'identification dans laquelle un ordinateur identifie, parmi les orientations de gradient de luminosité de deux crêtes qui représentent deux orientations de gradient de luminosité présentant un rapport perpendiculaire entre elles parmi les crêtes dans l'histogramme d'orientation de gradient de luminosité, une qui présente une inclinaison inférieure, par rapport à l'axe vertical de l'image, à une première valeur de seuil comme orientation de gradient de luminosité représentant les bords dans une direction verticale, tout en identifiant l'autre qui présente une inclinaison supérieure, par rapport à l'axe vertical de l'image, à la première valeur de seuil comme orientation de gradient de luminosité représentant les bords dans une direction horizontale, et
une étape d'estimation dans laquelle l'ordinateur estime l'angle de roulis à l'aide d'au moins une parmi l'orientation de gradient de luminosité identifiée des bords de direction verticale ou l'orientation de gradient de luminosité identifiée des bords de direction horizontale.

FIG. 1

FIG. 2

10

40

20

Imaging
Device

Roll-Angle Estimation Device

21

22

Memory

Histogram Generator

23

Estimation Section

50

Vehicle Controller

## FIG. 3

FIG. 4

# FIG. 5

```
                    ┌──────────────┐
                    │    START     │
                    └──────────────┘
                           │
                    ┌──────────────────┐
                    │ Obtain an image  │ S1
                    └──────────────────┘
                           │
         ┌──────────────────────────────┐
         │ Calculate brightness gradient │ S2
         │    orientation of each pixel  │
         └──────────────────────────────┘
                           │
         ┌──────────────────────────────┐
         │ Calculate brightness gradient │ S3
         │     intensity of each pixel   │
         └──────────────────────────────┘
                           │
         ┌──────────────────────────────┐
         │     Generate a histogram      │ S4
         └──────────────────────────────┘
```

S5 — Were mutually perpendicular two peaks detected? — YES

S6 — Estimate a roll angle using the two peaks as the vertical direction and the horizontal direction

NO

S7 — Is there a peak within a range of Threshold value Th2 from the previous vertical direction? — YES

S8 — Estimate a roll angle using the peak found in range Th2 as the vertical direction

NO

S9 — Is matching with the previous histogram successful? — YES

S10 — Estimate a roll angle using a result of matching

NO

END

FIG. 6

FIG. 7A

| -1 | 0 | 1 |
|----|---|---|
| -2 | 0 | 2 |
| -1 | 0 | 1 |

FIG. 7B

| -1 | -2 | -1 |
|----|----|----|
| 0  | 0  | 0  |
| 1  | 2  | 1  |

# FIG. 8

```
                    ┌─────────────┐
                    │    START    │
                    └─────────────┘
                           │
              ┌────────────────────────┐
              │       y = Y_start      │  S11
              └────────────────────────┘
                           │
              ┌────────────────────────┐
              │       x = X_start      │  S12
              └────────────────────────┘
                           │
              ┌────────────────────────┐
              │         a = 0          │  S13
              └────────────────────────┘
                           │
                     ◇ S14        YES
              ◇  Θ(x,y) = a ?  ◇ ──────────┐
                     ◇                      │
                     │ NO          ┌──────────────────────┐
                     │             │ h[a] = h[a] + m(x,y)  │ S15
                     │             └──────────────────────┘
              ┌────────────────────────┐
              │        a = a +1        │  S16
              └────────────────────────┘
                           │
                     ◇ S17
         NO  ◇    a = 180 ?   ◇
                     │
                    YES
              ┌────────────────────────┐
              │        x = x +1        │  S18
              └────────────────────────┘
                           │
                     ◇ S19
         NO  ◇   x = X_end ?   ◇
                     │
                    YES
              ┌────────────────────────┐
              │        y = y +1        │  S20
              └────────────────────────┘
                           │
                     ◇ S21
         NO  ◇   y = Y_end ?   ◇
                     │
                    YES
                    ┌─────────────┐
                    │     END     │
                    └─────────────┘
```

FIG. 9

## FIG. 10A

## FIG. 10B

## FIG. 11A

FIG. 11B

FIG. 12A

FIG. 12B

# FIG. 13

# FIG. 14

START

Obtain an image — S1

Calculate brightness gradient orientation of each pixel — S2

Calculate brightness gradient intensity of each pixel — S3

Generate a histogram — S4

Were mutually perpendicular two peaks detected? — S5

YES → Estimate a roll angle using the two peaks as the vertical direction and the horizontal direction — S6

NO

Is there a peak within a range of Threshold value Th2 from the previous vertical direction? — S7

YES → Estimate a roll angle using the peak found in range Th2 as the vertical direction — S8

NO

Is matching with the previous histogram successful? — S9

YES → Estimate a roll angle using a result of matching — S10

NO

Complement by internal sensor — S100

END

# FIG. 15

# FIG. 16

Brightness Gradient
Orientation Histogram

Peak1

Peak2

90°

θ1

θ2

δ=θ1−90
δ=θ2−180

Roll-Angle Estimation Device

Histogram Generator

Memory

Estimation Section

Imaging Device

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015058915 A
- JP 4950290 B
- JP 4862080 B
- DE 102014218075
- EP 2160019 A

**Non-patent literature cited in the description**

- **SCHLIPSING et al.** Video-Based Roll Angle Estimation for Two-Wheeled Vehicles. *IEEE Intelligent Vehicle Symposium,* 2011